# EUROPÄISCHE PATENTSCHRIFT

(11) **EP 3 528 989 B1**
(45) Veröffentlichungstag und Bekanntmachung des Hinweises auf die Patenterteilung: **25.11.2020**
(21) Anmeldenummer: 17780435.8
(22) Anmeldetag: 10.10.2017
(51) Int. Cl.: B23F 5/16, B23F 21/10, B23F 21/06

(54) **WÄLZSCHÄLWERKZEUG UND VERFAHREN FÜR DIE HARTFEINBEARBEITUNG VORVERZAHNTER WERKSTÜCKE**
HOB PEELING TOOL AND METHOD FOR HARD-FINE MACHINING OF PRE-TOOTHED WORKPIECES
OUTIL DE TAILLAGE EN DÉVELOPPANTE ET PROCÉDÉ POUR L'USINAGE HAUTE PRÉCISION DE MATÉRIAUX DURS DE PIÈCES PRÉ-DENTÉES

(30) Priorität: 21.10.2016 CH 14122016
(43) Veröffentlichungstag der Anmeldung: 28.08.2019
(73) Patentinhaber: Reishauer AG, 8304 Wallisellen (CH)
(72) Erfinder: HÄNNI, Florian, 8600 Dübendorf (CH); HAUFE, Frank, 8604 Volketswil (CH); KIRSCH, Roger, 76307 Karlsbad (DE); MARX, Hartmut, 8304 Wallisellen (CH)
(74) Vertreter: Detken, Andreas
(86) Internationale Anmeldenummer: PCT/EP2017/075792
(87) Internationale Veröffentlichungsnummer: WO 2018/073047

(56) Entgegenhaltungen:
- EP-A2- 0 314 647
- EP-A2- 2 570 218
- EP-B1- 0 132 350
- DE-A1- 1 627 379
- DE-A1- 10 308 234
- DE-U1-202009 009 518
- US-A- 5 876 160
- US-A1- 2015 063 927
- US-A1- 2015 314 382

## Beschreibung

### TECHNISCHES GEBIET

Die Erfindung betrifft ein Werkzeug zum Wälzschälen vorverzahnter, rotierender und insbesondere gehärteter oder hochfester Werkstücke, ein Verfahren zur Herstellung eines solchen Werkzeugs sowie Verfahren zur Hartfeinbearbeitung durch Wälzschälen unter Verwendung eines solchen Werkzeugs.

### STAND DER TECHNIK

In diesem Dokument werden Begriffe wie Schneide, Hauptschneide, Nebenschneide, Spanfläche, Spanflächenfase, Freifläche, Freiflächenfase, Schneidkeil, Spanwinkel, Fasenspanwinkel usw. im Einklang mit den Normen DIN 6580:1985-10 und DIN 6581:1985-10 verwendet. Ebenso werden Bewegungen wie Schnittbewegung, Vorschubbewegung und Wirkbewegung sowie Bezugsebenen wie Werkzeugbezugsebene, Schneidenebene, Keilmessebene und Arbeitsebene in Einklang mit diesen Normen verwendet.

Das Wälzschälen ist als Verzahnungsverfahren seit mindestens 1910 bekannt und ist damit ein sehr altes Verfahren. Eine erste Beschreibung des Verfahrens findet sich in der DE 243514 C. Beim Wälzschälverfahren handelt es sich um ein kontinuierliches spanabhebendes Verfahren zur Herstellung achssymmetrischer periodischer Strukturen, bei dem zahnradartige Werkzeuge verwendet werden. Die Zähne dieser Werkzeuge besitzen an den Stirnflächen Schneiden. Werkzeug und Werkstück werden auf Rotationsspindeln aufgenommen. Die Drehachsen von Werkzeug und Werkstück sind hierbei windschief angeordnet. Durch eine Kopplung der Drehbewegungen von Werkzeug und Werkstück um die Drehachsen wird die verfahrenstypische Wälzbewegung realisiert. Durch diese Wälzbewegung und eine Vorschubbewegung des Werkzeugs oder des Werkstücks entlang der Werkstückachse wird beim Wälzschälen eine Schnittbewegung sowohl im Gegenlauf als auch im Gleichlauf erzeugt. Mit diesem spanabhebenden Verfahren können sowohl Aussen- als auch Innenverzahnungen bearbeitet werden.

Ein Nachteil des Wälzschälverfahrens liegt in der aufwendigen Herstellung und schnellen Abnutzung des komplexen, werkstückspezifischen Werkzeugs. Um die Nachbearbeitung des Werkzeugs zu erleichtern, wird in der US 8,950,301 B2 ein Wälzschälwerkzeug mit auswechselbaren Messerstäben vorgeschlagen. Die Messerstäbe werden durch lösbare Befestigungsmittel im Grundkörper gehalten und können einzeln nachbearbeitet werden. Ein Wälzschälwerkzeug mit auswechselbaren Schneidelementen ist auch aus der DE 10 2012 011 956 B3 bekannt. Die Schneidelemente sind einzeln mit einer Werkzeugaufnahme verbunden. Ein weiteres Wälzschälwerkzeug mit auswechselbaren Schneidelementen ist in der US 2015/0063927 A1 offenbart. Die zahnförmigen Schneidelemente sind einzeln mit einem Grundkörper verschraubt. Die US 2015/0063927 A1 offenbart ein Werkzeug gemäß dem Oberbegriff des Anspruchs 1 sowie ein Verfahren gemäß dem Oberbegriff des Anspruchs 10.

Bei den genannten Werkzeugen ist die Genauigkeit der Lage der Schneiden durch den separaten Einbau der einzelnen Schneidelemente begrenzt. Die genannten Werkzeuge sind zudem jeweils sehr komplex in ihrer Herstellung und in ihrem Aufbau.

In der US 2015/0314382 A1 wurde erkannt, dass beim Wälzschälen aufgrund der Bahnbewegung des Werkzeuges relativ zum Werkstück zu jedem Zeitpunkt des Eingriffes andere Spanwinkel und andere Freiwinkel entstehen. Gemäss diesem Dokument ändert sich der Spanwinkel prozessbedingt während des Schneideneingriffs stetig und kann sogar hohe negative Werte von bis zu -50° annehmen. Um ungünstige Spanbedingungen zu vermeiden, schlägt das Dokument ein Verfahren zur Bestimmung einer Freiflächenkontur vor, schweigt aber zur Lage und Ausgestaltung der Spanfläche.

Die Dissertation von Christoph Kühlewein, Untersuchung und Optimierung des Wälzschälverfahrens mit Hilfe von 3D-FEM-Simulation, Forschungsbericht Band 174, wbk Institut der Universität Karlsruhe, 2013, Seiten 8-51, 109-112, 149-146, 155-176, diskutiert umfassend die prozesstypischen Bedingungen bei der Spanbildung und die daraus resultierenden Nachteile in der Wälzschältechnik.

Die Späne bestehen beim Wälzschälen zusammenhängend aus der einlaufenden Flanke, dem Kopf und der auslaufenden Flanke und bilden somit den in der Verzahntechnik bekannten Dreiflankenspan, der zusätzlich durch verfahrenstypische Störungen bei der Spanentstehung gekennzeichnet ist. Die Schneide steht während des Schnittvorgangs in Linienkontakt mit der Werkstückoberfläche. Mit einer Vielzahl von Schneidenpunkten kann die Schneide in einzelne Bereiche unterteilt und dann punktuell betrachtet werden. Für jeden dieser Schneidenpunkte kann die entsprechende Bewegungsbahn dargestellt werden. In jedem Schneidenpunkt bilden die Richtungsvektoren der Schnittbewegung und die Spanfläche der Schneide einen anderen Spanwinkel, der sich zudem im Verlauf der Schnittbewegung verändert. Der Spanwinkel variiert also einerseits räumlich entlang der Schneide und andererseits zeitlich während der Bewegung der Schneide durch die Zahnlücke.

Die Spanbildung während des Schnittvorganges ist also nicht gleichbleibend wie z.B. beim Drehen, sondern jeder Schneidenabschnitt unterliegt einer anderen und zeitlich veränderlichen Beanspruchung. Insbesondere in der Hartfeinbearbeitung mit ihren verhältnismässig hohen Bearbeitungskräften ist diese stark unterschiedliche Beanspruchung der verschiedenen Schneidenabschnitte nachteilig.

DE 103 08 234 A21 offenbart eine Schneidengeometrie für Schneiden der Dreh- oder Fräsbearbeitung metallischer Werkstoffe mit einer Fase, deren Fasenwinkel entlang der Schneidkante variiert. Die Erfindung beschränkt sich ausdrücklich auf Schneiden, die in der Dreh- oder Fräsbearbeitung zum Einsatz kommen.

### DARSTELLUNG DER ERFINDUNG

In einem ersten Aspekt ist es eine Aufgabe der vorliegenden Erfindung, ein Wälzschälwerkzeug anzugeben, das sich für die hochpräzise Hartfeinbearbeitung von vorverzahnten Werkstücken eignet und das sich einfach und dennoch mit hoher Präzision fertigen lässt.

Diese Aufgabe wird durch ein Wälzschälwerkzeug nach Anspruch 1 gelöst. Weitere Ausführungsformen sind in den abhängigen Ansprüchen angegeben.

Die Erfindung stellt also ein Werkzeug zum Wälzschälen vorverzahnter Werkstücke zur Verfügung. Das Werkzeug weist einen zahnradförmigen Grundkörper auf, der eine Werkzeugachse definiert und der an einer Stirnseite einen Kopfkreis definiert, sowie eine oder mehrere Schneidplatten, die stirnseitig im Bereich des Kopfkreises am Grundkörper angeordnet sind. Die Schneidplatten weisen jeweils mindestens einen Schneidzahn auf. Der Schneidzahn bildet eine Schneide, die mindestens entlang einer der Flanken des Schneidzahns verläuft. Entsprechend weist der Schneidzahn eine der Schneide zugeordnete Spanfläche und eine der Schneide zugeordnete Freifläche auf. Bezüglich der Begriffe Schneide, Spanfläche und Freifläche wird auf die genannten DIN-Normen verwiesen. Die Schneidplatten sind insbesondere aus einem harten und verschleissfesten Material gefertigt.

Erfindungsgemäss ist die Spanfläche des Schneidzahns mit einer Spanflächenfase versehen, die entlang der Schneide verläuft und um einen Fasenwinkel zur Spanfläche geneigt ist, wobei dieser Fasenwinkel im Verlauf der Schneide variiert (d.h., der Fasenwinkel ist nicht über den gesamten Verlauf der Schneide konstant, sondern verändert sich in mindestens einem Abschnitt der Schneide). Insbesondere variiert dieser Fasenwinkel entlang mindestens einer Flanke des Schneidzahns. Die Variation ist vorzugsweise kontinuierlich, d.h. ohne Sprünge.

Dabei wird der Fasenwinkel dann als veränderlich angesehen, wenn er sich im Verlauf der Schneide, und insbesondere im Verlauf einer Flanke des Schneidzahns, um mindestens 1° verändert. In einigen Ausführungsformen kann sich der Fasenwinkel im Verlauf der Schneide bzw. entlang der Flanke um mehr als 2° oder sogar um mehr als 5° verändern.

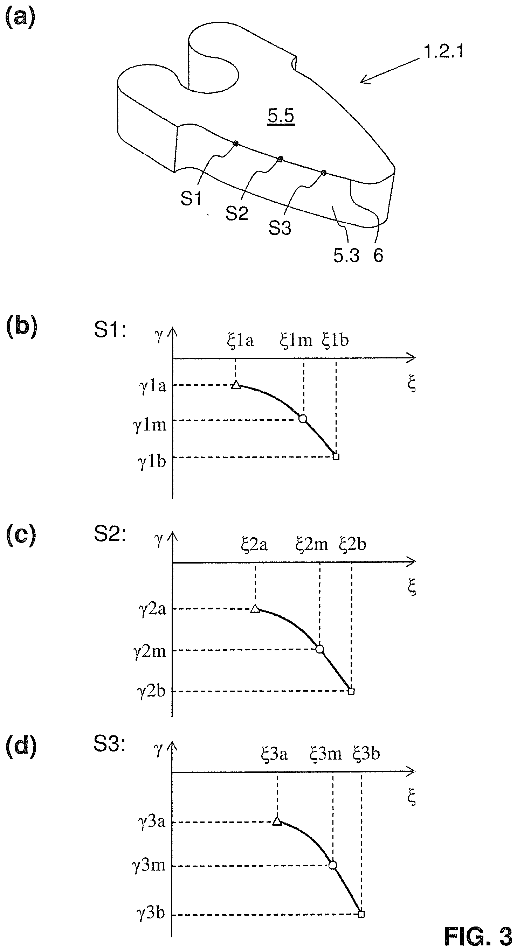

Indem an der Schneide eine Spanflächenfase mit veränderlichem Fasenwinkel vorgesehen wird, wird es möglich, die Zerspanungsbedingungen an jedem Schneidenpunkt durch Wahl eines geeigneten Fasenwinkels gezielt zu beeinflussen. Insbesondere wird es möglich, entlang der Schneide einheitlichere Zerspanungsbedingungen zu schaffen, als dies der Fall ist, wenn keine Spanflächenfase vorhanden ist. Detailliertere Überlegungen hierzu werden nachstehend im Zusammenhang mit den Figuren 3-5 diskutiert.

Die Spanflächenfase wird genügend breit ausgeführt, so dass der entstehende Span ausschliesslich auf der Spanflächenfase und nicht auf der nach DIN definierten Spanfläche ablaufen kann. Die Spanfläche verliert dadurch ihren von der DIN-Norm zugewiesenen Charakter und wird nur noch als Referenzfläche für die Auslegung und Fertigung der Fasen an der Spanfläche relevant. Relevant für den Schneidvorgang ist also nicht mehr primär die Orientierung der Spanfläche im Raum, sondern die Orientierung der Spanflächenfase. Entsprechend ist auch nicht mehr der Spanwinkel (der nach DIN relativ zur Spanfläche gemessen wird) relevant, sondern der Fasenspanwinkel (d.h. der Spanwinkel gemessen relativ zur Spanflächenfase). Dieser wird im Folgenden auch als faktischer Spanwinkel bezeichnet.

Um sicherzustellen, dass der Span bei der Hartfeinbearbeitung ausschliesslich über die Spanflächenfase abläuft, weist die Spanflächenfase eine Breite (gemessen in der Werkzeug-Schneidennormalebene) von mindestens 50 Mikrometern, vorzugsweise mindestens 100 Mikrometern bzw. mindestens dem Zweifachen der rechnerisch zu erwartenden Spandicke auf.

Bevorzugt weist die Schneide Abschnitte sowohl entlang der linken Flanke als auch entlang der rechten Flanke auf. Dadurch wird eine Bearbeitung beider Flanken der Werkstückverzahnung im selben Arbeitsgang ermöglicht. Dabei ist es bevorzugt, dass an der Schneide eine Spanflächenfase sowohl entlang der linken Flanke als auch entlang der rechten Flanke ausgebildet ist. Der Fasenwinkel der Spanflächenfase variiert dann entlang mindestens einer dieser Flanken, während er auf der anderen Flanke unter Umständen auch konstant sein kann. Es sind aber auch Ausführungsformen denkbar, in denen mit dem Werkzeug lediglich eine Einflankenbearbeitung ausgeführt wird. In diesem Fall genügt es, eine Spanflächenfase entlang dieser Flanke vorzusehen. Darüber hinaus kann der Schneidzahn einen Schneidenbereich am Zahnkopf und gegebenenfalls weitere Schneidenbereiche am Zahnfuss aufweisen, und es können auch in diesen Bereichen Spanflächenfasen vorgesehen sein. Vorzugsweise ist am Schneidzahn eine durchgehende Schneide ausgebildet, die unterbrechungsfrei vom Zahnfuss entlang der linken Flanke über den Zahnkopf und die rechte Flanke zum nächsten Zahnfuss verläuft. Vorzugsweise verläuft dann die Spanflächenfase durchgehend mindestens entlang der linken Flanke, des Zahnkopfs und der rechten Flanke.

Je nach Werkstückgeometrie, Werkzeuggeometrie und kinematischen Einstellungen der Maschine kann es insbesondere von Vorteil sein, wenn der Fasenwinkel im Verlauf der Schneide entlang mindestens einer der Flanken vom Zahnkopf zum Zahnfuss kontinuierlich zunimmt oder kontinuierlich abnimmt, z.B. um mindestens 20% zunimmt oder abnimmt. Falls sich die Schneide auch über die andere Flanke erstreckt, kann der Fasenwinkel entlang der zweiten Flanke konstant sein, er kann auf die gleiche Weise variieren wie auf der ersten Flanke (d.h. ebenfalls kontinuierlich zunehmen bzw. abnehmen), er kann in entgegengesetzter Weise variieren, oder er kann auf eine beliebige andere Art variieren. Welche Art von Variation des Fasenwinkels im Einzelfall optimal ist, hängt - wie schon ausgeführt wurde - von verschiedenen Parametern wie Werkstückgeometrie, Werkzeuggeometrie und kinematischen Einstellungen ab.

Auch die Breite der Spanflächenfase kann im Verlauf der Schneide variieren. Dies wird oft schon aus fertigungstechnischen Gründen dadurch bedingt sein, dass der Fasenwinkel der Spanflächenfase im Verlauf der Schneide variiert. Aus Anwendersicht ist es nämlich unter Umständen erwünscht, dass die Schneide zumindest entlang einer Zahnflanke immer in einer einzigen Schneidenebene liegt, die in einem festen Abstand parallel zur Spanfläche verläuft. In einer solchen Situation ist aber notwendigerweise die Breite der Spanflächenfase entlang dieser Zahnflanke umso grösser, je kleiner der Fasenwinkel relativ zur Spanfläche ist. Es ist aber auch denkbar, eine feste Fasenbreite der Spanflächenfase vorzusehen und nur den Fasenwinkel der Spanflächenfase variieren zu lassen. In diesem Fall wird die Schneide allerdings nicht in einer einzigen Ebene liegen, sondern einen gekrümmten Verlauf im Raum annehmen.

Je nach Werkstückgeometrie, Werkzeuggeometrie und kinematischen Einstellungen der Maschine kann es insbesondere von Vorteil sein, wenn die Breite der Spanflächenfase im Verlauf der Schneide entlang mindestens einer der Flanken vom Zahnkopf zum Zahnfuss kontinuierlich zunimmt oder kontinuierlich abnimmt. Die Breite der Spanflächenfase an der anderen Flanke kann konstant sein oder kann auf beliebige Weise variieren.

Um die Fertigung der Schneide zu vereinfachen und den Keilwinkel lokal (in unmittelbarer Nähe zur Schneide) zu vergrössern, kann die Freifläche des Schneidzahns entlang der Schneide mit einer Freiflächenfase versehen sein. Eine Freiflächenfase kann dabei nur entlang eines Abschnitts der Schneide oder entlang der gesamten Schneide vorgesehen sein. Die Freiflächenfase kann einen konstanten Fasenwinkel (gemessen in der Schneidennormalebene als Winkel zwischen Freifläche und Freiflächenfase) aufweisen, oder entsprechende Fasenwinkel können entlang der Schneide variieren.

Die Schneide des Schneidzahns kann mit einem Radius abgerundet sein. In diesem Fall ist es von Vorteil, wenn der Radius zwischen 10% und 40% der zu erwartenden Spandicke entspricht. In absoluten Zahlen ausgedrückt, wird der Radius vorteilhaft mindestens 15 Mikrometer betragen, in der Praxis oft 15-50 Mikrometer. Er kann entlang der Schneide variieren und insbesondere vom Zahnfuss zum Zahnkopf zunehmen.

Vorzugsweise sind die Spanflächen aller Schneidzähne des Werkzeugs in einer gemeinsamen werkzeugfesten Ebene angeordnet, wobei die gemeinsame Ebene orthogonal zur Werkzeugachse verläuft. Da der Span im Wesentlichen ausschliesslich über die Spanflächenfase abläuft und die Spanfläche an der Spanbildung nicht mehr teilnimmt, wird die Spanfläche zu einer reinen Referenzfläche, wie dies oben schon beschrieben wurde. Die Orientierung dieser Referenzfläche im Raum kann dadurch frei gewählt werden. Die Wahl dieser Orientierung orthogonal zur Werkzeugachse ermöglicht eine äusserst einfache Herstellung und Montage der Schneidplatten. Alle Schneidplatten können in einer gemeinsamen Ebene angeordnet, gegenüber dieser Ebene sehr einfach ausgerichtet und gemeinsam montiert werden, und mehrere Schneidzähne können an einer einzigen Schneidplatte ausgebildet sein.

Dabei kann das Werkzeug insbesondere schrägverzahnt sein, d.h. die Zähne des zahnradförmigen Grundkörpers und die Schneidzähne der Schneidplatten verlaufen nicht parallel zur Werkzeugachse, sondern geneigt zur Werkzeugachse. Anders als dies im Stand der Technik für schrägverzahnte Werkzeuge üblich ist, liegen in diesem Fall die Spanflächen aller Schneidzähne dennoch vorzugsweise in einer gemeinsamen Ebene, während im Stand der Technik die Spanflächen in der Regel treppenartig versetzt zueinander angeordnet sind.

Die harten und verschleissfesten Schneidplatten werden vorzugsweise unter Ausbildung einer Verbindungsschicht materialschlüssig mit dem weicheren Grundkörper verbunden, z.B. durch Kleben oder Löten bzw. andere moderne und zukünftige Verbindungstechniken. Dies ermöglicht es, die Schneidplatten fest zu fixieren. Vorzugsweise werden diese Schneidplatten am Werkzeug final bearbeitet, nachdem sie materialschlüssig mit dem Grundkörper verbunden wurden und bevor sie zur Werkstückbearbeitung eingesetzt werden.

Um Schwingungen aufgrund sich verändernder Bearbeitungskräfte zu dämpfen, ist es von Vorteil, wenn die Verbindungsschicht im Bereich der Zahnköpfe der Schneidzähne dicker ausgebildet ist als im Bereich der Zahnfüsse, insbesondere um 10 bis 200 Mikrometer, insbesondere 20 bis 100 Mikrometer, besonders bevorzugt um 30 bis 50 Mikrometer dicker. In diesem Fall bildet die Verbindungsschicht im Bereich der Zahnköpfe eine Dämmschicht, die dazu beiträgt, Schwingungen direkt am Entstehungsort zu vermindern.

Um die Dämmschicht einfach auszubilden, kann der Grundkörper im Bereich seines Kopfkreises eine stirnseitige Vertiefung, z.B. in Form einer Abdrehung, aufweisen, wobei die Vertiefung eine entsprechende Tiefe von 10 bis 200 Mikrometer, insbesondere 20 bis 100 Mikrometer, besonders bevorzugt 30 bis 50 Mikrometern hat und sich vorzugsweise bis zum äussersten Rand des Grundkörpers erstreckt. Die Verbindungsschicht erstreckt sich dann in den Bereich der Vertiefung hinein und bildet dort die Dämmschicht aus.

Um die Schneidelemente einfach am Grundkörper zu positionieren, kann das Werkzeug optional eine Positionierscheibe aufweisen, an deren Aussenumfang Positionierelemente ausgebildet sind. Die Schneidplatten werden dann am Aussenumfang der Positionierscheibe angeordnet und sind innenseitig mit Halteelementen versehen, welche komplementär zu den Positionierelementen ausgestaltet sind und bezüglich einer radialen und/oder tangentialen Richtung vorzugsweise einen Formschluss bzw. auch nur eine einfache Positionierung zwischen dieser Positionierscheibe und den Schneidplatten herstellen. Auf diese Weise können die Schneidplatten sehr einfach vorpositioniert werden, bevor die materialschlüssige Verbindung hergestellt wird. Alternativ können derartige Positionierelemente auch am Grundkörper ausgebildet sein; damit könnte die zusätzliche Positionierscheibe entfallen. Mit aktuellen Fertigungsmethoden kann diese zusätzliche Scheibe aber sehr kostengünstig hergestellt werden und ermöglicht damit auch die kostengünstigere Herstellung des Wälzschälwerkzeuges.

Die vorliegende Erfindung stellt insofern auch ein Werkzeug zum Wälzschälen vorverzahnter, rotierender Werkstücke zur Verfügung, welches aufweist:
einen zahnradförmigen Grundkörper, der eine Werkzeugachse definiert und der an einer Stirnseite einen Kopfkreis definiert, sowie
eine oder mehrere Schneidplatten, die stirnseitig im Bereich des Kopfkreises am Grundkörper angeordnet sind, wobei die Schneidplatten jeweils mindestens einen Schneidzahn aufweisen,
wobei die Schneidplatten materialschlüssig mit dem Grundkörper verbunden, bevorzugt verklebt sind,
wobei das Werkzeug Positionierelemente aufweist, die an einem Aussenumfang einer zusätzlichen Positionierscheibe oder am zahnradförmigen Grundkörper angeordnet sind;
wobei die Schneidplatten am Aussenumfang des Werkzeuges angeordnet sind, und
wobei die Schneidplatten innenseitig mit Halteelementen versehen sind, welche komplementär zu den Positionierelementen ausgestaltet sind und bezüglich einer radialen und/oder tangentialen Richtung eine Positionierung oder einen Formschluss zwischen den Positionierelementen und den Schneidplatten herstellen.

Die Positionierscheibe ist in axialer Richtung vorzugsweise (d.h. gemessen entlang der Werkzeugachse) kleiner oder maximal gleich dick wie die Schneidplatten.

Zur verbesserten Befestigung der Schneidplatten kann das Werkzeug eine zahnradförmige Hilfsscheibe aufweisen, wobei die Schneidplatten axial zwischen dem Grundkörper und der Hilfsscheibe angeordnet und sowohl mit dem Grundkörper als auch mit der Hilfsscheibe materialschlüssig verbunden, bevorzugt verklebt bzw. gelötet sind.

In vorteilhaften Ausführungsformen weisen die Schneidplatten jeweils mehrere Zähne, z.B. 2, 3, 4, 5, 6, 7 oder mehr Zähne, auf. Sie sind bevorzugt von kreisringbogenförmiger Form, wobei die Schneidzähne aussenumfänglich entlang einem Kreisbogen an der Schneidplatte angeordnet sind. Die Schneidplatten bilden dann am Grundkörper insgesamt einen Kreisring.

In einer anderen vorteilhaften Ausgestaltung weist das Werkzeug eine einzige kreisringförmige Schneidplatte auf, wobei die Schneidzähne aussenumfänglich an der Schneidplatte angeordnet sind.

Die harten und verschleissfesten Schneidplatten sind vorzugsweise aus einem der folgenden Hartwerkstoffe gefertigt: Hartmetall mit oder ohne Beschichtung, kubisches Bornitrid (CBN), polykristallines kubisches Bornitrid (PCBN) oder polykristalliner Diamant (PKD). Die Erfindung ist auch dann anwendbar, wenn zukünftig weitere Hartstoffe für Werkzeuge zum Wälzschälen von vorverzahnten Werkstücken zum Einsatz kommen bzw. wenn entsprechende Hartstoffe mittels 3D-Drucktechnik auf dem Grundkörper aufgebracht werden.

Im oder am Grundkörper des Wälzschälwerkzeuges kann ein RFID-Baustein angeordnet sein. In dem Speicher dieses Bausteins kann ein Identifikationscode gespeichert und berührungslos auslesbar sein, um das Wälzschälwerkzeug eindeutig zu identifizieren. Dies ermöglicht es, werkzeugspezifische Daten zur Werkzeuggeometrie, einschliesslich Daten zur Geometrie der Spanflächenfase, aus einer Datenbank abzurufen bzw. in dieser Datenbank zu verändern. Alternativ können solche Daten auch direkt im Speicher abgelegt und aus dem Speicher berührungslos auslesbar und ggfs. im Speicher veränderbar sein. Diese Geometriedaten sind für die Maschinensteuerung von grosser Wichtigkeit. Eine aufwändige und fehleranfällige Eingabe und/oder Änderung der Geometriedaten von Hand oder eine Übertragung von einem separaten Datenträger, der leicht verloren gehen oder verwechselt werden kann, kann dadurch entfallen.

In diesem RFID-Baustein kann weiterhin mindestens ein Sensor zur Erfassung von Betriebsparametern wie Temperatur, Schwingungen oder Körperschall angeordnet sein, wobei dieser Sensor dann ebenfalls berührungslos auslesbar und ggfs. ansteuerbar ist.

Zur Ausgestaltung und Anbringung geeigneter RFID-Bausteine und sicherer berührungsloser Signalübertragung wird auf die WO 2015/036519 A1 verwiesen.

In einem vorteilhaften Verfahren zur Herstellung eines Werkzeugs der vorstehend geschilderten Art gemäß dem unabhängigen Anspruch 10 werden die Schneidplatten mit einem Aufmass von vorzugsweise 100-500 Mikrometern, bezogen auf ihre Fertigkontur, hergestellt. Die Schneidplatten werden stirnseitig materialschlüssig mit dem Grundkörper verbunden und anschliessend endbearbeitet. Die Endbearbeitung kann sich insbesondere auf die Referenz- oder Basisflächen für Rundlauf und Planlauf am Grundkörper sowie auf die Spanflächen mit Spanflächenfasen, Freiflächen mit Freiflächenfasen und Radien an den Schneidplatten beziehen. Vorzugweise werden insbesondere die Spanflächenfasen bearbeitet, ebenso die Radien, soweit vorhanden, und optional Freiflächen mit Freiflächenfasen.

In einem erfindungsgemässen Verfahren zur Feinbearbeitung eines vorverzahnten Werkstücks gemäß dem unabhängigen Anspruch 11 wird mit einem Werkzeug der vorstehend geschilderten Art eine Wälzschäloperation durchgeführt. Dazu wird das Werkstück um eine Werkstückachse rotiert, das Werkzeug wird im Wälzeingriff mit dem Werkstück um eine windschief zur Werkstückachse ausgerichtete Werkzeugachse rotiert, und das Werkzeug wird parallel oder antiparallel zur Werkstückachse axial vorgeschoben. Wie schon vorstehend dargelegt wurde, ist die Spanfläche jedes Schneidzahns entlang der Schneide mit einer Spanflächenfase versehen, die um einen Fasenwinkel zur Spanfläche geneigt verläuft, wobei der Fasenwinkel entlang der Schneide variiert. Das Werkstück und Werkzeug stehen während des Durchlaufs der Schneide eines Schneidzahns durch das Werkstück in Eingriff, wobei die Späne, die sich während des Durchlaufs der Schneide eines Schneidzahns durch eine Zahnlücke des Werkstücks ausbilden, ausschliesslich über die Spanflächenfase ablaufen.

Während des Durchlaufs der Schneide eines Schneidzahns durch eine Zahnlücke des Werkstücks bildet sich an jedem Punkt der Schneide ein zeitlich veränderlicher Fasenspanwinkel, bezogen auf die Spanflächenfase, aus. Dieser Fasenspanwinkel wirkt als faktischer Spanwinkel. Der Fasenwinkel entlang der Schneide ist dabei derart variierend ausgebildet, dass sich ein Referenzwert, z.B. ein (ggfs. gewichteter) Mittelwert oder betragsmässiger Maximalwert des Fasenspanwinkels, ermittelt an einem jeweils festen Punkt der Schneide über den Durchlauf der Schneide durch die Zahnlücke, entlang der Schneide weniger stark ändert, als sich der entsprechende Referenzwert für den Spanwinkel ändern würde, wenn keine Spanflächenfase vorhanden wäre und der Span direkt über die Spanfläche ablaufen würde.

Dabei kann die Variation des Fasenwinkels so gewählt werden, dass der Referenzwert sogar annähernd konstant ist. Als Referenzwert kann ein ungewichteter Mittelwert oder ein gewichteter Mittelwert verwendet werden, bei dem beispielsweise der Eintritt der Schneide in das zu schneidende Material stärker gewichtet wird als der Austritt. Weiterhin kann auch die Breite der Spanflächenfase derart gestaltet werden, dass ein solcher Referenzwert im Verlauf der Schneide möglichst wenig variiert.

Bevorzugt ist der Fasenwinkel entlang der Schneide derart variierend ausgebildet, dass der betragsmässige Maximalwert des Fasenspanwinkels im gesamten Verlauf der Schneide negativ ist und im Bereich von -5° bis -40°, bevorzugt -20° bis -35° liegt.

Die Spanflächenfase weist bevorzugt im gesamten Verlauf der Schneide eine Breite auf, die grösser ist als die maximale Dicke des sich während des Durchlaufs der Schneide durch eine Zahnlücke des Werkstücks ausbildenden Spans. Vorzugsweise beträgt die Breite der Spanflächenfase im gesamten Verlauf der Schneide mindestens das Doppelte der maximalen Spandicke. Dadurch ist sichergestellt, dass der Span ausschliesslich über die Spanflächenfase und nicht über die eigentliche Spanfläche abläuft.

Das Werkzeug der vorstehend genannten Art eignet sich besonders zur Hartfeinbearbeitung von vorverzahnten Werkstücken durch Wälzschälen, d.h. zur Bearbeitung vorverzahnter Werkstücke, die entweder zuvor gehärtet wurden oder aus einem hochfesten Material wie beispielsweise vergütetem Stahl hergestellt wurden.

Der unabhängige Anspruch 15 beschreibt eine derartige Verwendung des Werkzeugs. Das erfindungsgemässe Werkzeug kann sowohl in der Gleich- als auch Gegenlaufbearbeitung zum Einsatz kommen, d.h. der axiale Vorschub des Werkstücks gegenüber dem Werkzeug kann in eine Richtung erfolgen, die dem axialen Anteil der Schnittgeschwindigkeit aufgrund der Wälzbewegung entspricht, oder in die dazu entgegengesetzte Richtung.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Prinzipskizze des Wälzschälens aus dem Stand der Technik (entnommen aus der DE 243514 C);
- Fig. 2: eine schematische Prinzipansicht des Wälzschälverfahrens mit Werkstück- und Werkzeugzuordnung;
- Fig. 3: in Teil (a) einen Schneidzahn ohne Spanflächenfase, an dem mehrere Schneidenpunkte markiert sind, sowie in den Teilen (b)-(d) jeweils einen beispielhaften Verlauf des Spanwinkels γ in Abhängigkeit vom Wälzwinkel *ξ* an jedem dieser Schneidenpunkte;
- Fig. 4: eine schematische Darstellung eines typischen Verlaufs des betragsmässig maximalen Spanwinkels entlang der Schneide beim Wälzschälen einer vorverzahnten Aussenverzahnung;
- Fig. 5: in Teil (a) einen Schneidzahn mit variabler Spanflächenfase, an dem dieselben Schneidenpunkte wie in Fig. 3 markiert sind; in den Teilen (b)-(d) den Verlauf des ursprünglichen Spanwinkels γ sowie des Fasenspanwinkels in Abhängigkeit vom Wälzwinkel *ξ*; in Teil (e) den Verlauf des betragsmässig maximalen ursprünglichen Spanwinkels sowie des betragsmässig maximalen Fasenspanwinkels;
- Fig. 6: eine perspektivische Teilansicht eines Werkzeuges zum Wälzschälen;
- Fig. 7: eine vergrösserte Detailansicht der Fig. 6 im Bereich A;
- Fig. 8: eine Explosionsansicht des Werkzeugs der Fig. 6;
- Fig. 9: eine perspektivische Teilansicht eines kompletten Werkzeugs mit einer zusätzlichen Hilfsscheibe und einer zweiten Verbindungsschicht;
- Fig. 10: eine vergrösserte Detailansicht der Fig. 9 im Bereich B;
- Fig. 11: eine vergrösserte Detailansicht der Fig. 9 im Bereich C;
- Fig. 12: eine Explosionsansicht des Werkzeugs der Fig. 9;.
- Fig. 13: eine perspektivische Ansicht eines Schneidplattenrohlings mit Einzelzahn, wobei die Spanfläche oben liegt und ihre Parallelfläche unten;
- Fig. 14: eine perspektivische Ansicht eines kreisringbogenförmigen Schneidplattensegmentrohlings mit drei Schneidzähnen, wobei die Spanfläche oben liegt;
- Fig. 15: eine perspektivische Ansicht eines vollständig kreisringförmigen Schneidplattenrohlings mit allen Schneidzähnen, wobei die Spanfläche oben liegt;
- Fig. 16: eine perspektivische Ansicht einer Schneidplatte mit Einzelzahn, wobei entlang einer Zahnflanke eine Spanflächenfase mit zunehmender Breite und entlang der anderen Zahnflanke eine Spanflächenfase mit abnehmender Breite ausgebildet ist sowie Freiflächenfasen ausgebildet sind;
- Fig. 17: eine Draufsicht auf die Spanfläche einer Schneidplatte nach Fig. 16;
- Fig. 18: eine vergrösserte Schnittansicht der Schneidplatte in der Ebene E-E der Fig. 17, die insbesondere die Span- und Freiflächenfase besser erkennen lässt;
- Fig. 19: eine perspektivische Ansicht einer Schneidplatte mit Einzelzahn, wobei entlang von beiden Zahnflanken Spanflächenfasen mit zunehmender Breite sowie Freiflächenfasen ausgebildet sind;
- Fig. 20: eine perspektivische Ansicht einer Schneidplatte mit Einzelzahn, wobei entlang von beiden Zahnflanken Spanflächenfasen mit abnehmender Breite sowie Freiflächenfasen ausgebildet sind;
- Fig. 21: eine perspektivische Ansicht einer Schneidplatte mit Einzelzahn, wobei entlang einer Zahnflanke eine Spanflächenfase mit zunehmender Breite und entlang der anderen Zahnflanke eine Spanflächenfase mit abnehmender Breite ausgebildet ist und keine Freiflächenfasen ausgebildet sind;
- Fig. 22: eine Draufsicht auf die Spanfläche einer Schneidplatte nach Fig. 21;
- Fig. 23: eine vergrösserte Schnittansicht der Schneidplatte in der Ebene F-F der Fig. 22, die insbesondere die Spanflächenfase besser erkennen lässt;

### BESCHREIBUNG BEVORZUGTER AUSFÜHRUNGSFORMEN

Im Folgenden werden die Bezeichnungen der Schneidengeometrie analog zur DIN 6580 und DIN 6581 vorgenommen, wie oben schon ausgeführt wurde. Diese Normen unterscheiden zwischen einer Schnittbewegung (ohne Berücksichtigung des Vorschubs) und einer Wirkbewegung (unter Berücksichtigung des Vorschubs). Die Normen sind ursprünglich zur Beschreibung einfacher Zerspansituationen entwickelt worden, wie sie z.B. beim Drehen oder Fräsen auftreten. Bei solchen Verfahren ist die Unterscheidung zwischen Schnittbewegung und Wirkbewegung in der Regel problemlos möglich. Das Wälzschälverfahren ist demgegenüber ein äusserst komplexes Verfahren, das neben einer Wälzbewegung auch einen axialen Vorschub des Werkzeugs oder des Werkstücks parallel oder antiparallel zur Werkstückachse umfasst. Dabei hat der axiale Vorschub beim Wälzschälen in der Regel einen relativ grossen Einfluss auf den Zerspanvorgang. Die Wälzbewegung sollte daher nicht losgelöst von der axialen Vorschubbewegung betrachtet werden. Im Folgenden wird aus diesem Grund die Konvention verwendet, dass dieser Axialvorschub nicht als Vorschub im Sinne der genannten DIN-Normen anzusehen ist und zur Schnittbewegung im Sinne der DIN-Normen zählt. Im Folgenden wird also als Schnittbewegung im Sinne der DIN-Normen diejenige Bewegung angesehen, die sich aus der Überlagerung der Wälzbewegung mit der axialen Vorschubbewegung ergibt. Nicht zur Schnittbewegung zählt dagegen eine mögliche radiale Zustellung des Werkzeugs oder des Werkstücks in einer radialen Richtung senkrecht zur Werkstückachse.

In allen Figuren werden für gleiche bzw. gleichartige Flächen, Schneiden, Fasen oder weitere Elemente übereinstimmende Bezugszeichen verwendet.

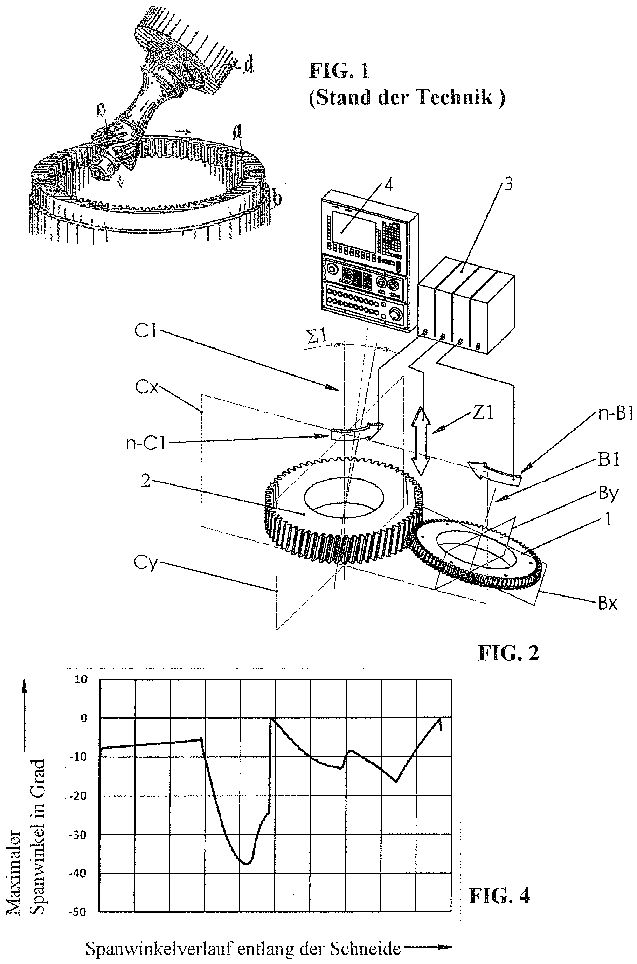

Die Figur 1 zeigt eine schematische Prinzipskizze des Wälzschälverfahrens mit innenverzahntem Werkstück, die der DE 243514 C entnommen wurde. Diese Schrift geht auf eine Anmeldung aus dem Jahre 1910 zurück. Sie illustriert das Grundprinzip des Wälzschälens: Das innenverzahnte Werkstück a wird mit einer drehbaren Spindel am Bett b um eine Werkstückachse rotiert. Das Werkzeug c wird in der Spindel d um eine Werkzeugachse rotiert, wobei diese Werkzeugachse windschief zur Werkstückachse steht (hier in einem Winkel von 45°). Das Werkzeug wird gleichzeitig entlang der Werkstückachse vorgeschoben. Die Zähne des Werkzeugs haben einen Schrägungswinkel, der so gewählt ist, dass die Zähne von Werkzeug und Werkstück ineinander eingreifen. Im vorliegenden Beispiel ist das Werkstück innen geradverzahnt, und der Schrägungswinkel am Werkzeug beträgt entsprechend 45°. An seiner Stirnseite bilden die Zähne des Werkzeugs jeweils eine durchgehende Schneide, die sich entlang der beiden Zahnflanken und des Zahnkopfs erstreckt.

Die Figur 2 zeigt eine weitere Prinzipansicht zum Wälzschälen, hier mit aussenverzahntem Werkstück. Das Werkstück 2 wird um die Werkstückachse C1 rotiert (Drehzahl n-C1). Das Werkzeug 1 wird um die Werkzeugachse B1 rotiert (Drehzahl n-Bl). Die Werkzeugachse B1 ist gegenüber der Werkstückachse C1 gekippt. Diese Verkippung kann durch mindestens einen Winkel Σ1 beschrieben werden. Zunächst denkt man sich die Werkstückachse und die Werkzeugachse parallel zueinander. Eine Werkstückbezugsebene Cx und eine Werkzeugbezugsebene Bx enthalten in dieser gedachten Situation sowohl die Werkstückachse C1 als auch die Werkzeugachse B1. Eine zweite Werkstückbezugsebene Cy, senkrecht stehend zur ersteren Ebene Cx, enthält die Werkstückachse C1. Eine zweite Werkzeugbezugsebene By enthält die Werkzeugachse B1 und steht senkrecht auf der ersten Werkzeugbezugsebene Bx. In der Ausgangssituation fallen die Ebenen Cx und Bx zusammen, und die Ebenen Cy und By sind parallel. Nun wird die Werkzeugachse B1 mindestens um einen Kippwinkel Σ1 in der Bezugsebene Cx verkippt. Die Ebenen Cx und Bx fallen danach weiterhin zusammen, während die Ebenen Cy und By zueinander um Σ1 verkippt sind. Durch das Verkippen entsteht beim Abwälzen eine Relativgeschwindigkeit entlang der Werkstückachse, also eine Geschwindigkeitskomponente, die einen Schnitt überhaupt erst ermöglicht. Anschliessend kann bei Bedarf die Werkzeugachse B1 um einen weiteren Kippwinkel in der Bezugsebene By verkippt werden. Der Effekt des zweiten Verkippens ist gleichwertig zu einem sogenannten Spanflächenversatz, bei dem aber die Ebenen Cx und Bx beabstandet sind. Es wird verwendet, um die Freiwinkelsituation zu vergrössern oder zu verkleinern. Teilweise ist ein solches Verkippen auch notwendig, um Kollisionen des Werkzeuges oder Werkzeughalters mit dem Werkstück, der Vorrichtung oder anderen Elementen zu verhindern. Die Drehungen von Werkzeug 1 und Werkstück 2 werden mittels CNC-Steuerung 3 synchronisiert. Zusätzlich erfolgt ein axialer Vorschub Z1 parallel oder antiparallel zur Werkstückachse C1. Die Einstellungen hierzu werden von dem Bediener an der Bedientafel 4 vorgenommen. Nicht dargestellt ist die entsprechende Wälzschälmaschine mit weiteren Achsen und Zubehör.

Die Figur 3 illustriert in Teil (a) einen einzelnen Schneidzahn 1.2.1 eines nachstehend noch näher erläuterten Wälzschälwerkzeugs. Der Schneidzahn definiert eine Spanfläche 5.5 und eine Freifläche 5.3, zwischen denen eine Schneide 6 ausgebildet ist. Die Schneide 6 erstreckt sich hier durchgehend vom Zahnfuss auf der linken Seite des Zahns über die Linksflanke, den Zahnkopf und die Rechtsflanke bis zum Zahnfuss auf der rechten Seite des Zahns. Auf der Schneide 6 sind entlang der Linksflanke drei Schneidenpunkte S1, S2, S3 markiert.

Die Teile (b) bis (d) der Figur 3 illustrieren in stark schematischer Weise beispielhaft einen Spanwinkelverlauf beim Durchlauf des Schneidzahns durch eine Zahnlücke eines vorverzahnten Werkstücks. Dabei wird angenommen, dass die Linksflanke, auf der die Punkte S1-S3 markiert sind, die einlaufende Flanke bildet. Typischerweise kommt dann der Punkt S1 vor dem Punkt S2 in Eingriff mit dem Werkstück; erst danach folgt der Punkt S3.

Teil (b) zeigt in qualitativer Weise einen Spanwinkelverlauf am Punkt S1. Beim Wälzwinkel ξ1*a* kommt Punkt S1 erstmals in Eingriff mit dem Werkstück und bleibt bis zum Wälzwinkel ξ1*b* in Eingriff. Der Spanwinkel *γ* ist stets negativ; er hat beim Wälzwinkel ξ1*a*, bei dem der Punkt S1 erstmals in Eingriff kommt, den Wert yla, wird mit zunehmendem Wälzwinkel immer negativer und erreicht sein betragsmässiges Maximum *y*1*b* bei demjenigen Wälzwinkel, an dem der Punkt S1 wieder ausser Eingriff mit dem Werkstück kommt. Der genaue Verlauf hängt stark von den konkreten Gegebenheiten (Werkzeug- und Werkstückgeometrie, Maschinenkinematik usw.) ab.

Der Punkt S2 kommt erst bei einem Wälzwinkel ξ2*a* in Eingriff und bleibt bis zu einem Wälzwinkel *ξ*2*b* in Eingriff. Dabei gilt *ξ*2a > *ξ*1*a* und *ξ*2*b* > *ξ*1*b.* Der Spanwinkel ändert sich in diesem Bereich von *γ*2a nach *γ*2*b.* Dabei gilt |γ2*a*| > |*γ*1*a*| und |*γ*2*b*| > |*γ*1*b*|. Bildlich gesprochen, ist der Spanwinkelverlauf am Punkt S2 "nach rechts" (hin zu grösseren Wälzwinkeln) und "nach unten" (hin zu stärker negativen Spanwinkeln) verschoben.

Entsprechend ist der Spanwinkelverlauf am Punkt S3 nochmals weiter zu grösseren Wälzwinkeln und stärker negativen Spanwinkeln hin verschoben (es gilt also *ξ*3*a* > *ξ*2*a* > *ξ*1*a, ξ*3*b > ξ*2*b > ξ*1*b,* |*γ*3*a*| > |*γ*2*a*| > |*γ*1*a*| und |*γ*3*b*| > |*γ*2*b*| > |*γ*1*b*|).

Der Spanwinkel hängt also einerseits vom Punkt S1, S2, S3 auf der Schneide 6 ab, und andererseits ändert sich der Spanwinkel an jedem dieser Punkte in Abhängigkeit vom Wälzwinkel. Dabei erreicht der Spanwinkel an jedem der Punkte einen anderen betragsmässigen Maximalwert *γb,* nämlich am Punkt S1 den betragsmässigen Maximalwert *γ*1*b,* am Punkt S2 den betragsmässigen Maximalwert *γ*2*b* und am Punkt S3 den betragsmässigen Maximalwert *γ*3*b.*

Die Figur 4 illustriert einen Verlauf dieses betragsmässigen Maximalwerts für eine reale Zerspansituation. Man erkennt, dass der betragsmässige Maximalwert an der einlaufenden Flanke zunächst nahezu konstant ist, dann im Kopfbereich stark negativ wird, am Übergang zur auslaufenden Flanke fast bis auf Null fällt und an der auslaufenden Flanke erneut deutlich variiert. Der exakte Spanwinkelverlauf hängt für eine konkrete Fertigungssituation stark von verschiedenen Parametern, insbesondere der Werkzeuggeometrie, der Werkstückgeometrie, den Verzahnungsverhältnissen (Innen-/Aussenverzahnung, Schrägungswinkel) und der Maschinenkinematik ab. Er ist mit mathematischen Methoden bzw. 3D-Simulation berechenbar. In der Dissertation Kühlewein sind geeignete Berechnungsmethoden zusammengefasst. Während der konkrete Verlauf des Spanwinkels also stark von verschiedenen Faktoren abhängt, haben die meisten Verläufe die Gemeinsamkeit, dass der betragsmässige Maximalwert des Spanwinkels entlang der Schneide stark variiert.

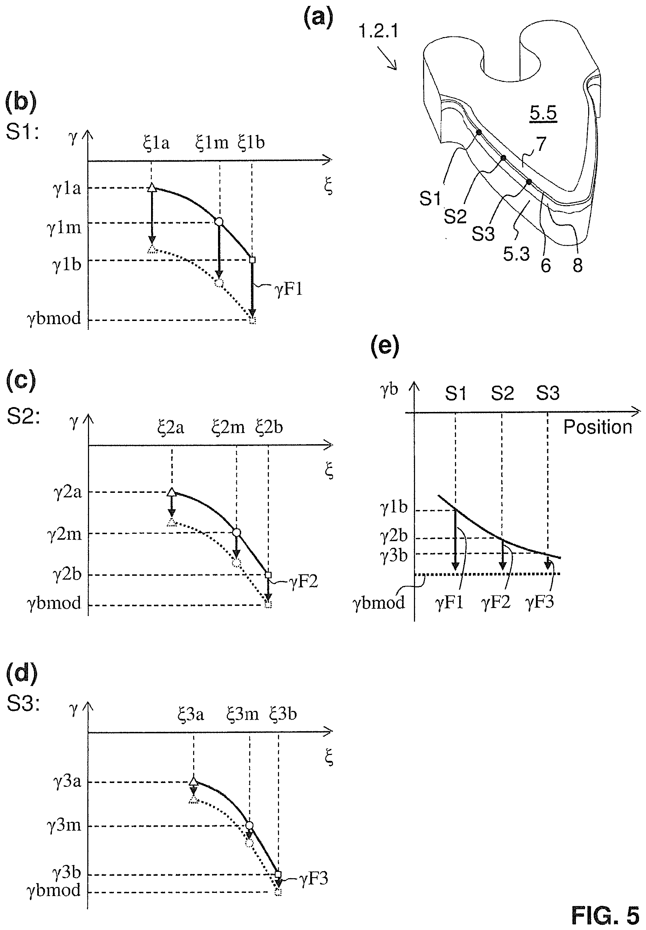

Derart stark im Verlauf der Schneide schwankende betragsmässige Maxima für den Spanwinkel γ sind nachteilig, da sie zu einer ungleichmässigen Abnutzung des Werkzeugs, zu einem ungleichmässigen Bearbeitungsresultat und zu starken Wechselbeanspruchungen führen können. Die vorliegende Erfindung schlägt daher vor, diesen Verlauf gewissermassen zu glätten. Wie dies erreicht werden kann, ist in der Figur 5 illustriert. Wie in Teil (a) der Figur 5 erkennbar ist, ist nun zwischen Spanfläche 5.5 und Schneide 6 eine Spanflächenfase 7 vorgesehen. Diese ist durch einen Fasenwinkel *yF* gekennzeichnet, also durch den Winkel zwischen Spanfläche 5.5 und Spanflächenfase 7 in der sogenannten Werkzeug-Schneidennormalebene bzw. Keilmessebene nach DIN, d.h. in einer Ebene, die im betrachteten Punkt der Schneide senkrecht zur Schneide liegt. Dabei variiert der Fasenwinkel γF entlang dem Verlauf der Schneide. In den Zeichnungen werden dabei die Fasen am Schneidzahn generell schematisch und vergrössert dargestellt. Die Fasen haben in der Realität typische Breiten von maximal einigen hundert Mikrometern und sind deshalb in den Figuren nicht real darstellbar.

Im vorliegenden Fall nimmt der Fasenwinkel *yF* zwischen den Punkten S1 und S3 stetig ab, so dass gilt: *γF1* > *γF2* > *γF3.* Die Spanflächenfase 7 ist überall so breit, dass der Span ausschliesslich über die Spanflächenfase abläuft. Dazu ist die Spanflächenfase 7 mindestens doppelt so breit wie die Spandicke. Dadurch wirkt faktisch die Spanflächenfase 7 beim Zerspanen so, wie dies zuvor die Spanfläche 5.5 getan hat. Der Fasenspanwinkel, der sich bei der Bearbeitung zur Spanflächenfase ausbildet, wirkt also faktisch wie der Spanwinkel. Er wird im Folgenden daher auch als faktischer Spanwinkel *γ*0 bezeichnet. Die frühere Spanfläche 5.5 wird zu einer blossen Referenzfläche, die auf den Zerspanvorgang keinen direkten Einfluss mehr hat. Ausserdem ist eine Freiflächenfase 8 vorgesehen, und die Schneide 6 ist mit einem Radius verrundet; diese Aspekte können aber für den Moment ausser Betracht gelassen werden.

In den Teilen (b) bis (d) der Figur 5 ist illustriert, welche Auswirkung die Spanflächenfase 7 nun auf den Verlauf des faktischen Spanwinkels hat. An jedem der Punkte S1, S2 und S3 bildet sich ein faktischer Spanwinkel aus, der um den jeweiligen Fasenwinkel γ*F* negativer ist, als wenn keine Spanflächenfase vorhanden wäre. Der faktische Spanwinkelverlauf in den Figuren 5(b) bis 5(d) (gepunktet dargestellt) ist also gegenüber dem ursprünglichen Spanwinkelverlauf der Figuren 3(b) bis 3(d) (durchgezogen dargestellt) um den jeweiligen Fasenwinkel *γF*1*, γF*2 bzw. *γF*3 "nach unten" verschoben (siehe die Pfeile in den Figuren 5(b) bis 5(d)).

Dabei sind die Fasenwinkel *γF*1, *γF*2 und *γF3* im vorliegenden Beispiel so gewählt, dass das betragsmässige Maximum des faktischen Spanwinkels an allen drei Punkten S1, S2 und S3 identisch wird. Dies ist in der Figur 5(e) illustriert. Mit durchgezogener Linie ist dort der Verlauf des betragsmässigen Maximalwerts *γb* des Spanwinkels für die Situation der Figur 3 dargestellt. Gestrichelt ist der Verlauf des betragsmässigen Maximalwerts des faktischen Spanwinkels für die Situation der Figur 5 illustriert. Man erkennt, dass der betragsmässige Maximalwert des faktischen Spanwinkels nun an allen drei Schneidenpunkten S1, S2 und S3 identisch ist und den Wert *γbmod* annimmt. Dies wurde erreicht, indem der Fasenwinkel *γF* der Spanflächenfase 7 entsprechend variiert, hier also in geeigneter Weise vom Fuss zum Kopf des Schneidzahns hin abnimmt.

Auf diese Weise lässt sich der Verlauf des betragsmässigen Maximums in einer gewünschten Weise "glätten" und sogar weitgehend konstant halten.

Anstatt den Verlauf des betragsmässigen Maximums zu "glätten" oder sogar konstant zu halten, kann auch für jeden Schneidenpunkt ein geeigneter Mittelwert des Spanwinkels gebildet werden, und die Spanflächenfase kann so gewählt werden, dass dieser Mittelwert für den faktischen Spanwinkel weniger stark variiert als in Abwesenheit der Spanflächenfase oder sogar konstant wird. In den Figuren 3(b) bis 3(d) und 5(b) bis 5(d) ist hierzu beispielhaft für jeden Schneidenpunkt S1, S2, S3 ein Mittelwert *γ1m, γ2m* bzw. *y3m* eingetragen, der jeweils an einem Wälzwinkel *ξ*1*m*, *ξ*2*m* bzw. *ξ*3*m* eingenommen wird. Es ist offensichtlich, dass die dargestellte Wahl der Fasenwinkel dazu führt, dass auch dieser Mittelwert an allen drei Schneidenpunkten S1, S2, S3 weitgehend identisch wird.

Bei der Bildung des Mittelwerts kann dabei eine geeignete Wichtung vorgenommen werden. Beispielsweise kann der Spanwinkel bei dem Wälzwinkel, an dem der betreffende Schneidenpunkt erstmals in Eingriff kommt, stärker gewichtet werden als der Spanwinkel an anderen Wälzwinkeln. Im Extremfall gibt die Wichtung dem Spanwinkel für einen bestimmten Wert des Wälzwinkels das Gewicht 1 und für alle anderen Werte das Gewicht Null (die Wichtung stellt also gewissermassen eine Deltafunktion dar). Wenn z.B. nur dem betragsmässigen Maximum des Spanwinkels das Gewicht 1 gegeben wird und allen anderen Spanwinkeln das Gewicht Null, wird die Mittelwertbildung äquivalent zur Auswahl des betragsmässigen Maximums des Spanwinkels. Insofern kann die hier geschilderte gewichtete Mittelwertbildung als eine Verallgemeinerung der Auswahl des betragsmässigen Maximums angesehen werden.

In den obigen Beispielen waren nur drei Schneidenpunkte ausgewählt worden. Selbstverständlich lassen sich diese Überlegungen auf eine beliebige Anzahl von Schneidenpunkten verallgemeinern.

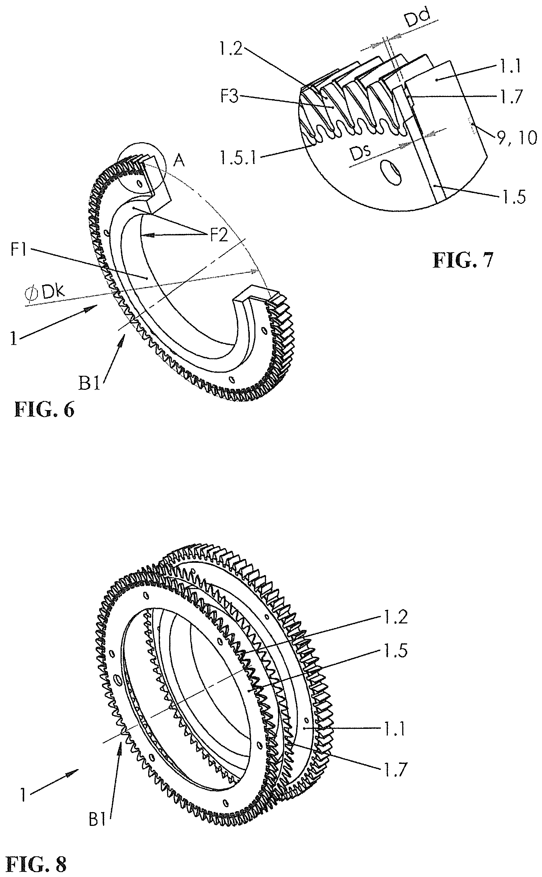

Die Figuren 6 und 7 zeigen ein Wälzschälwerkzeug 1 mit einer Vielzahl von Schneidzähnen. In der Fig. 8 ist eine Explosionsansicht des Werkzeugs 1 dargestellt, die den Werkzeugaufbau noch besser erkennen lässt. Das Werkzeug weist einen zahnradförmigen Grundkörper 1.1 sowie eine Vielzahl von daran befestigten Schneidplatten 1.2 auf, die nachstehend noch näher beschrieben werden. Der Grundkörper 1.1 besitzt eine zentrale Bohrung im Grundkörper 1.1 mit Referenz- oder Basisflächen F1, F2, an denen das Werkzeug auf einer an sich bekannten Spindelnase einer Wälzschälmaschine zur Rotation um eine Werkzeugachse B1 festspannt wird. Die Schneidplatten 1.2 sind mit ihren Schneidzähnen mittig zu den Zähnen des Grundkörpers 1.1 positioniert und fixiert. Zur Positionierung der Schneidplatten dient eine Positionierscheibe 1.5. Die Positionierscheibe mit Dicke Ds weist an ihrem Aussenumfang Positionierelemente 1.5.1 auf, die komplementär zu entsprechenden, nachstehend noch näher beschriebenen Halteelementen der Schneidplatten ausgebildet sind. Die Schneidplatten 1.2 sind mit Hilfe der Positionierelemente 1.5.1 und der Halteelemente am Aussenumfang der Positionierscheibe 1.5 angeordnet und definieren einen Kopfkreisdurchmesser Dk. Dabei ist in radialer Richtung und in Umfangsrichtung ein Formschluss zwischen jedem Halteelement und der Positionierscheibe 1.5 ausgebildet. Die Schneidplatten 1.2 weisen eine etwas grössere Dicke als die Dicke Ds der Positionierscheibe auf, um eine gezielte Nachbearbeitung der Schneidplatten zu erleichtern. Sie werden über eine Verbindungsschicht 1.7 dauerhaft und fest mit dem Grundkörper 1.1 verbunden. Die Verbindungsschicht 1.7 kann mittels Kleben, Löten oder anderen Fügetechniken realisiert werden. Sie weist eine Dicke Dd auf.

Im Zahnkopfbereich des Grundkörpers 1.1 kann optional eine Vertiefung in Form einer Abdrehung in der Tiefe von vorzugsweise ca. 0,03 bis 0,05 Millimeter erfolgen. Damit erhöht sich die Dicke Dd der Verbindungsschicht 1.7 in diesem Bereich um den gleichen Betrag. Dieser stärkere Teil wirkt als Material- und Fugendämpfer positiv auf die Spanbildung.

Bevorzugt ist die Verbindungsschicht elektrisch und thermisch leitfähig. Dadurch können beim Spanen mit dem Werkzeug 1 Wärmestau und störende Spanansammlungen weitgehend vermieden werden. Ursachen für diese Erscheinungen sind die starke Reibung an der Schneide und die daraus folgende elektrostatische Aufladung. Geeignete Kleber und Lote sind für diese Aufgaben erhältlich auf dem Markt.

Die Endbearbeitung des Werkzeugs erfolgt erst nach dem Aufkleben bzw. Löten. Dabei werden zunächst am Grundkörper die Referenzflächen F1, F2 für Rund- und Planlauf nachbearbeitet. Sodann werden die Schneidplatten 1.2 in die finale Form gebracht.

In der Fig. 7 ist ausserdem ein RFID-Baustein 9 mit Sensoren 10 angedeutet. Der RFID-Baustein 9 trägt Daten zur Werkzeuggeometrie, insbesondere zur Fasengeometrie des Schneidzahns 1.2 oder einen Code (z.B. eine Seriennummer), der es ermöglicht, die entsprechenden Daten aus einer Datenbank abzurufen. Die Sensoren 10 messen die Temperatur, Schwingungen und den Körperschall. Sie sind mit dem RFID-Baustein und seinem Antennensystem wirkverbunden und lassen sich berührungslos auslesen.

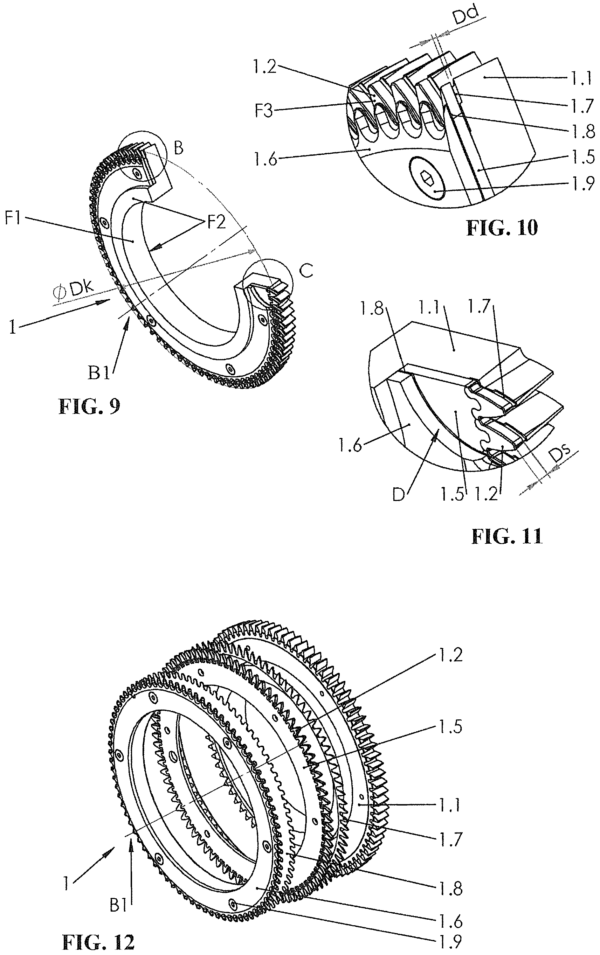

Die Figuren 9 bis 12 zeigen analog zu den Figuren 6 bis 8 den Aufbau eines Werkzeugs 1 mit einer zusätzlichen zahnradförmige Hilfsscheibe 1.6. Diese ist mit Hilfe einer zweiten Verbindungsschicht 1.8 auf der Positionierscheibe 1.5 und den Schneidplatten 1.2 aufgebracht und überdeckt dabei insbesondere auch zumindest einen Fussbereich der Schneidzähne der Schneidplatten 1.2. Die Hilfsscheibe 1.6 ist zusätzlich mittels Verbindungselementen 1.9 mit dem Grundkörper 1.1 verbunden und erhöht damit die Stabilität des Werkzeugs.

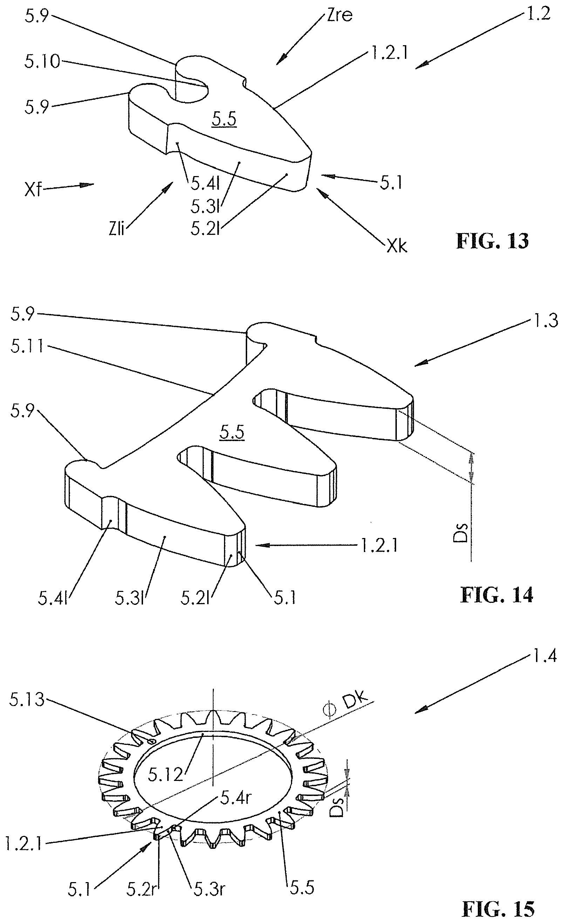

Die Figur 13 zeigt einen Rohling für eine Schneidplatte 1.2. Diese Schneidplatte trägt einen einzigen Schneidzahn 1.2.1. Folgende Bereiche des Schneidzahns sind eingetragen: Zahnkopf Xk, Zahnfuss Xf, linke Zahnflanke Zli, rechte Zahnflanke Zre, Spanfläche 5.5, Kopffreifläche 5.1, linke Kopfeckenfreifläche 5.2l, linke Hauptfreifläche 5.31 und linke Fussfreifläche 5.4l. Am Innenumfang des Rohlings sind die schon erwähnten Halteelemente 5.9 angeordnet, die mit den Positionierelementen 1.5.1 der Positionierscheibe 1.5 zusammenwirken. Zwischen den Halteelementen 5.9 liegt ein Bogenbereich 5.10.

Während die Schneidplatte der Figur 13 nur einen einzigen Schneidzahn trägt, ist es auch denkbar, mehrere Schneidzähne auf einer einzigen gemeinsamen Schneidplatte auszubilden. Die Figur 14 zeigt einen Rohling für eine Schneidplatte 1.3, die die Form eines Kreisringsegments aufweist und drei Schneidzähne trägt. Am Innenumfang des Rohlings sind wiederum Halteelemente 5.9 angeordnet, zwischen denen ein Kreissegment 5.11 liegt.

Die Figur 15 zeigt einen Rohling für eine Schneidplatte 1.4, die komplett kreisringförmig ist und alle Schneidzähne des Werkzeugs trägt. Zusätzlich eingezeichnet sind der Innenumfang 5.12, eine Positionierhilfe 5.13, der Kopfkreisdurchmesser Dk sowie folgende Freiflächen: rechte Kopfeckenfreifläche 5.2r, rechte Hauptfreifläche 5.3r und rechte Fussfreifläche 5.4r. Diese Form der Schneidplatte wird vorzugsweise für relativ kleine Werkzeuge, z.B. mit einem Kopfkreisdurchmesser Dk < 60 mm, eingesetzt. Für Werkzeuge mit Dk > 60 mm sind dagegen Schneidplatten mit Einzelzähnen gemäss Figur 12 oder segmentförmige Schneidplatten mit einer begrenzten Zähnezahl gemäss Figur 13 bevorzugt.

Unabhängig von der Zähnezahl pro Schneidplatte bestehen die Schneidplatten vorzugsweise aus superharten Werkstoffen wie z.B. Hartmetall mit oder ohne Beschichtung, PCBN, CBN, oder PKD. Sie werden mit einem Mindestaufmass gegenüber der Fertigkontur aus Halbzeugen herausgetrennt. Die Dicke der Schneidplatten beträgt vorzugsweise 0.5 bis 2 mm und sollte aus Kostengründen 5 mm nicht überschreiten.

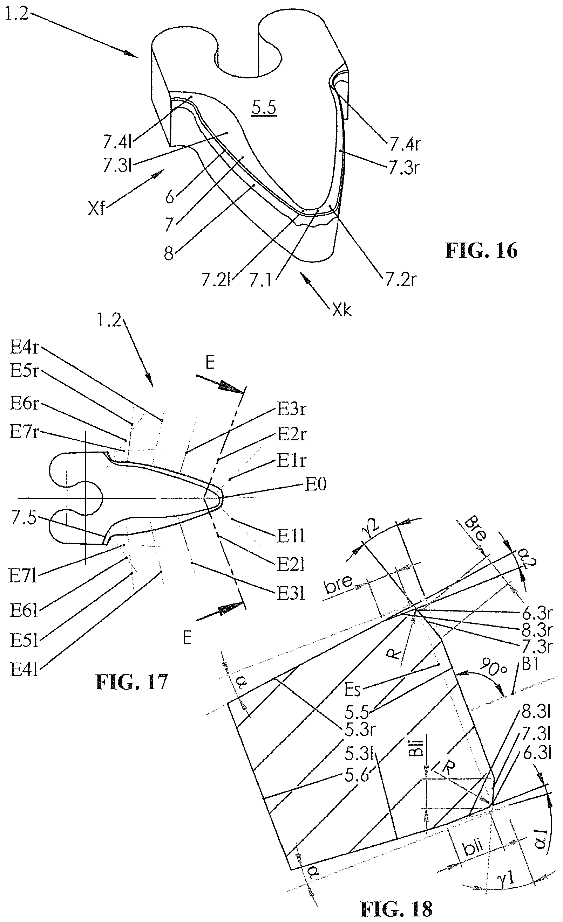

Die Figuren 16-18 zeigen eine Schneidplatte 1.2 mit einem einzelnen Schneidzahn gemäss einer Ausführungsform der vorliegenden Erfindung. Der Schneidzahn weist entlang der gesamten Schneide 6 eine variable Spanflächenfase 7, eine Freiflächenfase 8 sowie einen variablen Radius R auf.

Die Spanfläche 5.5, die Spanflächenfase 7, die Freiflächen 5.1, 5.21, 5.2r, 5.3l, 5.3r, 5.4l, 5.4r, die Freiflächenfase 8 sowie die Radien R lassen sich für jeden Punkt auf der Schneide 6 am besten in der jeweiligen Werkzeug-Schneidennormalebene charakterisieren, d.h. in einer werkzeugfesten Schnittebene, die an ihrem Schnittpunkt mit der Schneide 6 senkrecht auf der Schneide 6 steht. In der Fig. 17 sind beispielhaft acht solche Ebenen dargestellt. Eine erste Schnittebene E0 schneidet die Schneide 6 am Zahnkopf. Die weiteren Schnittebenen setzen sich aus einer linken und einer rechten Halbebene zusammen, wobei die Halbebenen in der Zahnmitte verbunden sind und im Allgemeinen einen Winkel einschliessen. Im Beispiel der Figur 16 sind das die linken Halbebenen E1l, E21, E31, E41, E51, E61, E7l und die rechten Halbebenen E1r, E2r, E3r, E4r, E5r, E6r, E7r. Jede Halbebene schneidet die Schneide 6 orthogonal. In der Praxis kann natürlich eine höhere Zahl von Schnittebenen verwendet werden.

In der Figur 18 ist ein Querschnitt durch die Schneidplatte in der Schnittebene E-E, (entsprechend den Halbebenen E21, E2r) dargestellt. Der Schneidzahn definiert mit seiner Oberseite die Spanfläche 5.5. Diese verläuft orthogonal zur Werkzeugachse B1. Der Schneidzahn definiert ausserdem eine linke Hauptfreifläche 5.31 und eine rechte Hauptfreifläche 5.3r. Diese Flächen sind bezüglich der Werkzeugachse B1 nach innen geneigt, so dass sich der Schneidzahn nach unten hin keilförmig verjüngt. Auf der Unterseite weist der Schneidzahn eine Basisfläche 5.6 auf, die parallel zur Spanfläche 5.5 verläuft und als Fügefläche zur Verbindung mit dem Grundkörper 1.1 dient.

An der Spanfläche 5.5 ist entlang der linken Zahnflanke als Teil der Spanflächenfase 7 eine linke Spanflächenfase 7.3l ausgebildet. Diese weist eine Breite Bli auf (in den genannten Normen wird diese Breite auch als *b_{fγ}* bezeichnet) und ist um einen Fasenwinkel *γ*1 gegenüber der Spanfläche 5.5 geneigt. Die Breite Bli ist so gewählt, dass bei der Hartfeinbearbeitung die Spandicke immer kleiner als die Breite Bli ist, so dass der Span ausschliesslich über die Spanflächenfase 7 abläuft. Bevorzugt beträgt die Breite Bli mindestens das Zweifache der Spandicke oder mindestens 100 Mikrometer. Entlang der rechten Zahnflanke ist an der Spanfläche 5.5 als Teil der Spanflächenfase 7 eine rechte Spanflächenfase 7.3r ausgebildet. Diese hat eine Breite Bre, die sich von der Breite Bli unterscheiden kann, und einen rechten Fasenwinkel y2, der sich vom linken Fasenwinkel *γ*1 unterscheiden kann.

An der linken Hauptfreifläche 5.3l ist zudem als Teil der Freiflächenfase 8 eine linke Freiflächenfase 8.3l ausgebildet. Diese weist eine Breite bli auf (in den genannten Normen auch als *b_{fα}* bezeichnet) und ist um einen Winkel *α*1 gegenüber der linken Hauptfreifläche 5.31 geneigt. Entsprechend ist an der rechten Hauptfreifläche 5.3r als Teil der Freiflächenfase 8 eine rechte Freiflächenfase 8.3r ausgebildet. Diese weist eine Breite bre auf und ist um einen Winkel *α*2 gegenüber der rechten Hauptfreifläche 5.3r geneigt. Beide Hauptfreiflächen sind um einen Winkel *α* zur Werkzeugachse B1 geneigt.

Die Schneide 6 ist zwischen der Spanflächenfase 7 und der Freiflächenfase 8 ausgebildet. Insbesondere ist zwischen der linken Spanflächenfase 7.31 und der linken Freiflächenfase 8.31 eine linke Hauptschneide 6.31 gebildet. Entsprechend ist zwischen der rechten Spanflächenfase 7.3r und der rechten Freiflächenfase 8.3r eine rechte Hauptschneide 6.3r gebildet. Die Fasenwinkel *γ*1, *γ*2 und die Breiten Bli, Bre der Spanflächenfasen ändern sich im Verlauf der Schneide 6 kontinuierlich. Die Schneide 6 liegt dabei in einer Ebene Es, die unterhalb der Spanfläche 5.5 und parallel zu dieser verläuft.

In der Ausführungsform der Figuren 16-18 nimmt die Breite Bli der linken Spanflächenfase 7.31 entlang der linken Zahnflanke vom Zahnkopf Xk zum Zahnfuss Xf kontinuierlich zu. Der Fasenwinkel *γ*1 zwischen der linken Spanflächenfase 7.31 und der Spanfläche 5.5 nimmt vom Zahnkopf Xk zum Zahnfuss Xf kontinuierlich ab. Entlang der rechten Zahnflanke sind die Verhältnisse dagegen gerade umgekehrt: Die Breite Bre der rechten Spanflächenfase 7.31 nimmt entlang der rechten Zahnflanke vom Zahnkopf Xk zum Zahnfuss Xf geringfügig, aber kontinuierlich ab. Der Fasenwinkel y2 zwischen der rechten Spanflächenfase 7.31 und der Spanfläche 5.5 nimmt vom Zahnkopf Xk zum Zahnfuss Xf dagegen geringfügig zu. Die Schneide 6 ist mit einem Radius R verrundet, wobei dieser Radius vorzugsweise mit Werten zwischen 10% und 40% der rechnerisch zu erwartenden Spandicke ausgelegt wird.

Am Zahnkopf setzen die dort gelegenen Spanflächenfasen 7.2l, 7.2r und 7.1 die Spanflächenfasen 7.31 bzw. 7.3r entlang der Flanken kontinuierlich fort, ebenso am Zahnfuss die dortigen Spanflächenfasen 7.4l, 7.4r. Im Weiteren ist die Grenzkurve 7.5 der Spanflächenfase 7 eingezeichnet. Diese begrenzt die Spanfläche bzw. Referenzfläche zu den verschiedenen Spanflächenfasen hin.

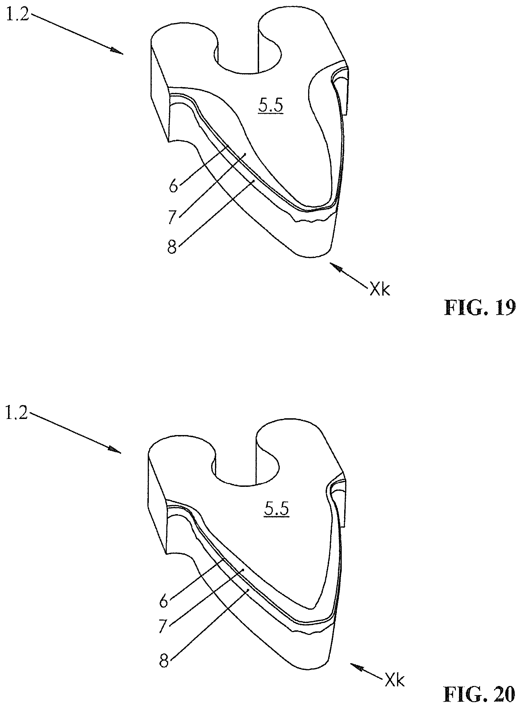

In den Figuren 19 und 20 sind beispielhaft weitere Varianten gezeigt. So nehmen in der Ausführungsform der Fig. 19 die Breiten Bli, Bre der Spanflächenfasen 7 sowohl entlang der linken als auch entlang der rechten Zahnflanke vom Zahnkopf Xk zum Zahnfuss Xf kontinuierlich zu, während sie in der Fig. 20 entlang der beiden Flanken kontinuierlich abnehmen. Entsprechend nehmen die Fasenwinkel *γ*1 und *γ*2 der Spanflächenfasen 7 vom Zahnkopf Xk zum Zahnfuss Xf in der Figur 19 kontinuierlich ab, während sie in der Figur 20 kontinuierlich zunehmen.

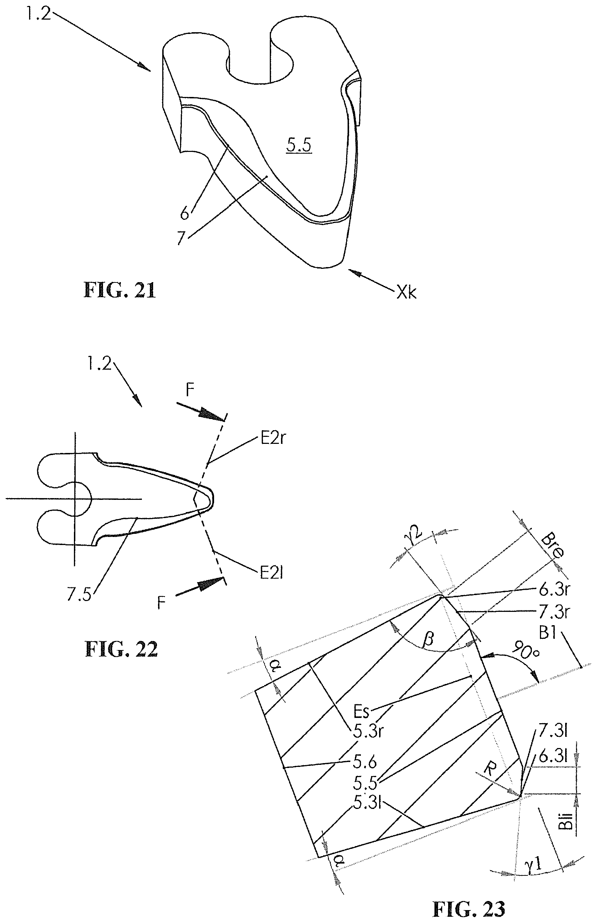

Die Figuren 21-23 zeigen in verschiedenen Ansichten exemplarisch eine Variante, bei der keine Freiflächenfase 8 vorhanden ist. Ansonsten entspricht diese Variante den Ausführungsformen der Figuren 16-18. Die Schneide 6 ist hier zwischen der Spanflächenfase und der Freifläche ausgebildet.

Die Erfindung wurde vorstehend anhand von Ausführungsbeispielen erläutert. Selbstverständlich kann eine Vielzahl von Abwandlungen vorgenommen werden, ohne den Bereich der Erfindung zu verlassen.

So können z.B. die Halteelemente und die dazu komplementären Positionierelemente zum Positionieren der Schneidplatten auch anders ausgestaltet sein. Statt an einer Positionierscheibe können Positionierelemente auch direkt am Grundkörpern ausgebildet sein. Die Halteelemente brauchen keinen Formschluss mit den Positionierelementen einzugehen; es kann auch genügen, dass sie als reine Positionierhilfen dienen.

### BEZUGSZEICHENLISTE

- 1: Wälzschälwerkzeug
- 1.1: Grundkörper
- 1.2.: Schneidplatte mit Einzelzahn
- 1.2.1: Schneidzahn
- 1.3: Schneidplatte in Form eines Kreisringsegments
- 1.4: Schneidplatte als kompletter Kreisring mit allen Schneidzähnen
- 1.5: Positionierscheibe
- 1.5.1: Positionierelement
- 1.6: Hilfsscheibe
- 1.7: Verbindungsschicht mit Dämmschicht
- 1.8: Verbindungsschicht
- 1.9: Verbindungselement
- 2: Werkstück mit Verzahnung
- 3: CNC- Steuerung
- 4: Bedientafel
- 5.1: Kopffreifläche
- 5.21, 5.2r: Kopfeckenfreifläche links, Kopfeckenfreifläche rechts
- 5.31, 5.3r: Hauptfreifläche links, Hauptfreifläche rechts
- 5.4l, 5.4r: Fussfreifläche links, Fussfreifläche rechts
- 5.5: Spanfläche
- 5.6: Basisfläche
- 5.9: Halteelement
- 5.10: Bogenbereich
- 5.11: Kreissegment
- 5.12: Innenumfang
- 5.13: Positionierhilfe
- 6: Schneide
- 6.31: linke Hauptschneide
- 6.3r: rechte Hauptschneide
- 7: Spanflächenfase
- 7.1: Spanflächenfase, Kopfschneide
- 7.21, 7.2r: Spanflächenfase linke Kopfecke, Spanflächenfase rechte Kopfecke
- 7.31, 7.3r: Spanflächenfase linke Hauptschneide, Spanflächenfase rechte Hauptschneide
- 7.41, 7.4r: Spanflächenfase linke Fussschneide, Spanflächenfase rechte Fussschneide
- 7.5: Grenzkurve der Spanflächenfase zur Spanfläche
- 8: Freiflächenfase
- 8.1: Freiflächenfase, Kopfschneide
- 8.21, 8.2r: Freiflächenfase linke Kopfecke, Freiflächenfase rechte Kopfecke
- 8.31, 8.3r: Freiflächenfase linke Hauptschneide, Freiflächenfase rechte Hauptschneide
- 8.41, 8.4r: Freiflächenfase linke Fussschneide, Freiflächenfase rechte Fussschneide
- 9: RFID-Baustein mit Antenne
- 10: Sensoren für Temperatur, Schwingungen und Körperschall

- A...F: Detail- oder Schnittfläche bzw. Ausbruch in den Figuren
- Bli: Breite der Spanflächenfase, linke Zahnflanke
- Bre: Breite der Spanflächenfase, rechte Zahnflanke
- bli: Breite der Freiflächenfase, linke Zahnflanke
- bre: Breite der Freiflächenfase, rechte Zahnflanke
- B1: Rotationsachse der Werkzeugspindel (Werkzeugachse)
- Bx: Werkzeugbezugsebene in X-Richtung
- By: Werkzeugbezugsebene in Y-Richtung
- Cx: Werkstückbezugsebene in X-Richtung
- Cy: Werkstückbezugsebene in Y-Richtung
- C1: Rotationsachse der Werkstückspindel (Werkstückachse)
- Ds: Dicke der Schneidplatte
- Dd: erhöhte Dicke der Verbindungs- und Dämmschicht
- Dk: Kopfkreisdurchmesser des Werkzeuges
- E1l...E7l, E0: Schnittebenen, links und mittig sowie senkrecht zu den Schnittkanten
- E1r... E7r: Schnittebenen, rechts und senkrecht zu den Schnittkanten
- Es: parallele Ebene zur Spanfläche, in der die Schneiden liegen
- F1, F2, F3: Referenzflächen am Werkzeug
- R: Radius
- S1, S2, S3: Schneidenpunkte
- Xk: Zahnkopfbereich
- Xf: Zahnfussbereich
- Z1: Axialer Vorschub
- Zli: linke Zahnflanke
- Zre: rechte Zahnflanke

- α: Freiwinkel
- α1: Fasenfreiwinkel, linke Zahnflanke
- α2: Fasenfreiwinkel, rechte Zahnflanke
- β: Keilwinkel
- γ: Spanwinkel
- γ0: faktischer Spanwinkel
- γ1: Fasenwinkel, linke Zahnflanke
- γ2: Fasenwinkel, rechte Zahnflanke
- *γ*1*a, γ2a, γ3a*: Spanwinkel beim erstmaligen Eingriff
- *γ*1*b, γ2b, γ3b*: Spanwinkel beim Ende des Eingriffs
- γ1*m,* γ*2m,* γ*3m*: gewichtete Mittelwerte des Spanwinkels
- γ*F*: Fasenwinkel
- *γF*1*,γF*2*,γF*3: Fasenwinkel
- γ*bmod*: betragsmässiger Maximalwert des Fasenspanwinkels
- Σ1: Werkzeugeinstellwinkel zur Ebene Cx
- *ξ*: Wälzwinkel
- *ξ*1*a, ξ*2*a*, *ξ*3*a*: Wälzwinkel beim erstmaligen Eingriff
- *ξ*1*b, ξ*2*b, ξ*3*b*: Wälzwinkel beim Ende des Eingriffs
- *ξ*1*m*, ξ2*m*, *ξ*3*m*: Wälzwinkel, an denen gewichtete Mittelwerte erreicht werden

## Patentansprüche

1. Werkzeug zum Wälzschälen vorverzahnter Werkstücke (2), aufweisend:
einen zahnradförmigen Grundkörper (1.1), der eine Werkzeugachse (B1) definiert und der an einer Stirnseite einen Kopfkreis (Dk) definiert, sowie
eine oder mehrere Schneidplatten (1.2; 1.3; 1.4), die stirnseitig im Bereich des Kopfkreises (Dk) am Grundkörper (1.1) angeordnet sind, wobei die Schneidplatten (1.2; 1.3; 1.4) jeweils mindestens einen Schneidzahn (1.2.1) aufweisen, wobei der Schneidzahn (1.2.1) eine Schneide (6) bildet, die mindestens entlang einer Flanke des Schneidzahns (1.2.1) verläuft, und wobei der Schneidzahn eine der Schneide (6) zugordnete Spanfläche (5.5) und eine der Schneide (6) zugeordnete Freifläche (5.1-5.4) aufweist,
**dadurch gekennzeichnet,**
**dass** die Spanfläche (5.5) entlang der Schneide (6) mit einer Spanflächenfase (7) versehen ist, die um einen Fasenwinkel (yl, y2) zur Spanfläche (5.5) geneigt verläuft,
**dass** der Fasenwinkel (yl, y2) im Verlauf der Schneide (6) variiert, und
**dass** die Spanflächenfase (7) eine Breite von mindestens 50 Mikrometer aufweist.

2. Werkzeug nach Anspruch 1, **dadurch gekennzeichnet, dass** der Fasenwinkel (yl, y2) im Verlauf der Schneide (6) entlang mindestens einer der Flanken vom Zahnkopf (Xk) zum Zahnfuss (Xf) kontinuierlich zunimmt oder kontinuierlich abnimmt.

3. Werkzeug nach Anspruch 1 oder 2, **dadurch gekennzeichnet, dass** die Spanflächenfase (7) eine Breite (Bre, Bli) aufweist, die im Verlauf der Schneide (6) variiert, insbesondere im Verlauf der Schneide (6) entlang mindestens einer der Flanken vom Zahnkopf (Xk) zum Zahnfuss (Xf) kontinuierlich zunimmt oder kontinuierlich abnimmt.

4. Werkzeug nach einem der vorhergehenden Ansprüche, **dadurch gekennzeichnet, dass** die Schneide (6) des Schneidzahns mit einem Radius (R) abgerundet ist, wobei der Radius (R) vorzugweise mindestens 15 Mikrometer beträgt und optional vom Zahnfuss zum Zahnkopf zunimmt.

5. Werkzeug nach einem der vorhergehenden Ansprüche, **dadurch gekennzeichnet, dass** die Spanflächen (5.5) aller Schneidzähne (1.2.1) in einer gemeinsamen Ebene angeordnet sind, wobei die gemeinsame Ebene orthogonal zur Werkzeugachse (B1) verläuft.

6. Werkzeug nach einem der vorhergehenden Ansprüche, **dadurch gekennzeichnet, dass** die Schneidplatten (1.2; 1.3; 1.4) unter Ausbildung einer Verbindungsschicht (1.7) materialschlüssig mit dem Grundkörper (1.1) verbunden sind, wobei die Verbindungsschicht (1.7) im Bereich des Zahnkopfs (Xk) der Schneidzähne (1.2.1) vorzugsweise dicker ausgebildet ist als im Bereich des Zahnfusses (Xf).

7. Werkzeug nach Anspruch 6, **dadurch gekennzeichnet,**
**dass** das Werkzeug eine Positionierscheibe (1.5) aufweist, die an ihrem Aussenumfang Positionierelemente (1.5.1) aufweist, wobei die Schneidplatten (1.2; 1.3; 1.4) am Aussenumfang der Positionierscheibe (1.5) angeordnet sind, und wobei die Schneidplatten (1.2; 1.3; 1.4) innenseitig mit Halteelementen (5.9) versehen sind, welche komplementär zu den Positionierelementen (1.5.1) ausgestaltet sind und bezüglich einer radialen und/oder tangentialen Richtung einen Formschluss zwischen der Positionierscheibe (1.5) und den Schneidplatten (1.2; 1.3; 1.4) herstellen, und/oder
**dass** das Werkzeug eine zahnradförmige Hilfsscheibe (1.6) aufweist und die Schneidplatten (1.2; 1.3; 1.4) axial zwischen dem Grundkörper (1.1) und der Hilfsscheibe (1.6) angeordnet und sowohl mit dem Grundkörper (1.1) als auch mit der Hilfsscheibe (1.6) materialschlüssig fest verbunden, bevorzugt verklebt oder gelötet sind.

8. Werkzeug nach einem der vorhergehenden Ansprüche, **dadurch gekennzeichnet,**
**dass** jede Schneidplatte (1.3) von kreisbogenförmiger Form ist und eine Mehrzahl von Schneidzähnen (1.2.1) aufweist, wobei die Schneidzähne (1.2.1) aussenumfänglich entlang einem Kreisbogensegment an der Schneidplatte (1.3) angeordnet sind, und wobei die Schneidplatten (1.3) insgesamt einen Kreisring bilden, oder
**dass** das Werkzeug eine einzige kreisringförmige Schneidplatte (1.4) aufweist, wobei die Schneidzähne aussenumfänglich an der Schneidplatte (1.4) angeordnet sind.

9. Werkzeug nach einem der vorhergehenden Ansprüche, **dadurch gekennzeichnet, dass** im oder am Grundkörper (1.1) ein RFID-Baustein (10) angeordnet ist, welcher mit einem Speicher versehen ist,
wobei im Speicher ein Identifikationscode zur eindeutigen Identifikation des Werkzeugs abgelegt ist, und/oder
wobei im Speicher Daten zur Werkzeuggeometrie, insbesondere Daten zur Geometrie der Spanflächenfase, abgelegt sind und aus dem Speicher berührungslos auslesbar und/oder im Speicher veränderbar sind, und/oder
wobei der RFID-Baustein mindestens einen Sensor zur Erfassung von Temperatur, Schwingungen oder Körperschall trägt, der berührungslos auslesbar und/oder ansteuerbar ist.

10. Verfahren zur Herstellung eines Werkzeugs, umfassend das Bereitstellen eines zahnradförmigen Grundkörpers (1.1), der eine Werkzeugachse (B1) definiert und der an einer Stirnseite einen Kopfkreis (Dk) definiert, und einer oder mehrerer Schneidplatten (1.2; 1.3; 1.4), die stirnseitig im Bereich des Kopfkreises (Dk) am Grundkörper (1.1) angeordnet sind, wobei die Schneidplatten (1.2; 1.3; 1.4) jeweils mindestens einen Schneidzahn (1.2.1) aufweisen, wobei der Schneidzahn (1.2.1) eine Schneide (6) bildet, die mindestens entlang einer Flanke des Schneidzahns (1.2.1) verläuft, und wobei der Schneidzahn eine der Schneide (6) zugordnete Spanfläche (5.5) und eine der Schneide (6) zugeordnete Freifläche (5.1-5.4) aufweist, wobei die Schneidplatten (1.2; 1.3; 1.4) stirnseitig mit dem Grundkörper (1.1) verbunden sind,
**dadurch gekennzeichnet, dass** die Schneidplatten (1.2; 1.3; 1.4) materialschlüssig mit dem Grundkörper (1.1) verbunden sind und nach ihrer Anbringung am Grundkörper (1.1) endbearbeitet werden, wobei die Spanfläche (5.5) entlang der Schneide (6) mit einer Spanflächenfase (7) versehen wird, die um einen Fasenwinkel (*γ*1, *γ2)* zur Spanfläche (5.5) geneigt verläuft, wobei der Fasenwinkel (*γ*1, *γ*2) im Verlauf der Schneide (6) variiert, und wobei die Spanflächenfase (7) eine Breite von mindestens 50 Mikrometer aufweist.

11. Verfahren zur Feinbearbeitung eines vorverzahnten Werkstücks durch Wälzschälen mit einem Werkzeug nach einem der Ansprüche 1-9,
wobei das Werkstück (2) um eine Werkstückachse (C1) rotiert wird,
wobei das Werkzeug (1) in Wälzeingriff mit dem Werkstück (2) um eine windschief zur Werkstückachse (C1) ausgerichteten Werkzeugachse (B1) rotiert wird, wobei der Wälzeingriff einen Wälzwinkel definiert, und
wobei das Werkzeug (1) parallel oder antiparallel zur Werkstückachse (C1) axial vorgeschoben wird,
wobei die Spanfläche (5.5) jedes Schneidzahns (1.2.1) entlang der Schneide (6) mit einer Spanflächenfase (7) versehen ist, die um einen Fasenwinkel (*γ*1, *γ*2) zur Spanfläche (5.5) geneigt verläuft, wobei der Fasenwinkel (*γ*1, *γ*2) entlang der Schneide (6) variiert, und
die Späne, die sich während des Durchlaufs der Schneide (6) eines Schneidzahns (1.2.1) durch eine Zahnlücke des Werkstücks (2) ausbilden, ausschliesslich über die Spanflächenfase (7) ablaufen, so dass die Spanfläche (5.5) nur noch als Referenzfläche wirkt.

12. Verfahren nach Anspruch 11,
wobei sich während des Durchlaufs der Schneide (6) eines Schneidzahns (1.2.1) durch eine Zahnlücke des Werkstücks (2) an jedem Punkt der Schneide (6) ein Fasenspanwinkel, bezogen auf die Spanflächenfase, ausbildet, der als faktischer Spanwinkel wirkt,
wobei der Fasenspanwinkel an jedem Schneidenpunkt abhängig ist vom Wälzwinkel während des Durchlaufs der Schneide (6) durch die Zahnlücke, und
wobei der Fasenwinkel (yl, y2) entlang der Schneide (6) derart variierend ausgebildet ist, dass sich ein Referenzwert des Fasenspanwinkels, berechnet an jeweils einem festen Punkt der Schneide (6) über den Durchlauf der Schneide (6) eines Schneidzahns (1.2.1) durch die Zahnlücke, entlang der Schneide weniger stark ändert, als sich der entsprechende Referenzwert für den Spanwinkel ändern würde, wenn keine Spanflächenfase vorhanden wäre und der Span direkt über die Spanfläche (5.5) ablaufen würde.

13. Verfahren nach Anspruch 11 oder 12, **dadurch gekennzeichnet, dass** der Fasenwinkel (*γ*1, *γ*2*)* entlang der Schneide derart variierend ausgebildet ist, dass der Fasenspanwinkel im gesamten Verlauf der Schneide negativ ist und sein betragsmässiger Maximalwert im Bereich von -5° bis -40°, bevorzugt -20° bis - 35°, liegt.

14. Verfahren nach einem der Ansprüche 11-13, wobei die Spanflächenfase (7) entlang der gesamten Schneide (6) eine Breite (Bre, Bli) aufweist, die grösser ist als die maximale Dicke des sich während des Durchlaufs der Schneide (6) durch eine Zahnlücke des Werkstücks (2) ausbildenden Spans, bevorzugt mindestens doppelt so gross.

15. Verwendung eines Werkzeugs nach einem der Ansprüche 1-9 zur Hartfeinbearbeitung von vorverzahnten Werkstücken (2) durch Wälzschälen.

## Claims

1. A tool for hob peeling workpieces (2) having pre-machined teeth, comprising:
a gear-wheel shaped main body (1.1) which defines a tool axis (B1) and which on an end face defines a tip circle (Dk), and
one or a plurality of cutting inserts (1.2; 1.3; 1.4) which are disposed on the main body (1.1) at the end face in the region of the tip circle (Dk), wherein each of the cutting inserts (1.2; 1.3; 1.4) comprises at least one cutting tooth (1.2.1), the cutting tooth (1.2.1) forming a cutting edge (6) which runs at least along one flank of the cutting tooth (1.2.1), and wherein the cutting tooth has a cutting face (5.5) associated with the cutting edge (6), and a clearance face (5.1 - 5.4) associated with the cutting edge (6),
**characterised in that**
the cutting face (5.5) along the cutting edge (6) is provided with a cutting face chamfer (7) which in relation to the cutting face (5.5) runs so as to be inclined by a chamfer angle (*γ*1, *γ*2),
the chamfer angle (*γ*1, *γ*2) varies along the cutting edge (6), and
the cutting face chamfer (7) has a width of at least 50 micrometres.

2. The tool according to Claim 1, **characterised in that** the chamfer angle (*γ*1, *γ*2) along the cutting edge (6) continuously increases or decreases from the tooth tip (Xk) to the tooth base (Xf) along at least one of the flanks.

3. The tool according to Claim 1 or 2, **characterised in that** the cutting face chamfer (7) has a width (Bre, Bli) which varies along the cutting edge (6), in particular, which continuously increases or continuously decreases along at least one of the flanks from the tooth tip (Xk) to the tooth base (Xf).

4. The tool according to any one of the preceding claims, **characterised in that** the cutting edge (6) of the cutting tooth is rounded by a radius (R), the radius (R) preferably being at least 15 micrometres and optionally increasing from the tooth base to the tooth tip.

5. The tool according to any one of the preceding claims, **characterised in that** the cutting faces (5.5) of all cutting teeth (1.2.1) are disposed in one common plane, wherein the common plane runs so as to be orthogonal to the tool axis (B1).

6. The tool according to any one of the preceding claims, **characterised in that** the cutting inserts (1.2; 1.3; 1.4) are integrally bonded to the main body (1.1) under the formation of a connection layer (1.7), the connection layer (1.7) in the region of the tooth tip (Xk) of the cutting teeth (1.2.1) preferably being thicker than in the region of the tooth base (Xf).

7. The tool according to Claim 6, **characterised in that**
the tool comprises a positioning disk (1.5) which on the external circumference thereof has positioning elements (1.5.1), the cutting inserts (1.2; 1.3; 1.4) being disposed at the external circumference of the positioning disk (1.5), and the cutting inserts (1.2; 1.3; 1.4) on their inside being provided with holding elements (5.9) which are configured so as to be complementary to the positioning elements (1.5.1) and in relation to a radial and/or tangential direction establish a form-fit between the positioning disk (1.5) and the cutting inserts (1.2; 1.3; 1.4), and/or
the tool comprises a gear-wheel shaped auxiliary disk (1.6), the cutting inserts (1.2; 1.3; 1.4) being disposed axially between the main body (1.1) and the auxiliary disk (1.6) and being integrally connected, preferably adhesively bonded or brazed, to both the main body (1.1) as well as to the auxiliary disk (1.6).

8. The tool according to any one of the preceding claims, **characterised in that**
each cutting insert (1.3) has a circular-arc shape and has a plurality of cutting teeth (1.2.1), wherein the cutting teeth (1.2.1) are disposed on the cutting insert (1.3) at its external circumference along a circular-arc segment, and wherein the cutting inserts (1.3) in total form an annulus, or
the tool comprises a single annular cutting insert (1.4), the cutting teeth being disposed on the cutting insert (1.4) at its external circumference.

9. The tool according to any one of the preceding claims, **characterised in that** an RFID module (10) is disposed in or on the main body (1.1), said RFID module being provided with a memory,
wherein an identification code for unequivocally identifying the tool is stored in the memory; and/or
wherein data pertaining to the tool geometry, in particular data pertaining to the geometry of the cutting face chamfer, is stored in the memory and is retrievable from the memory and/or is modifiable in the memory in a non-contacting manner; and/or
wherein the RFID module carries at least one sensor for detecting temperature, vibrations or impact sounds, said sensor being accessible and/or actuatable in a non-contacting manner.

10. A method for producing a tool, comprising the provision of a gear-wheel shaped main body (1.1) which defines a tool axis (B1) and which at an end face defines a tip circle (Dk), and of one or a plurality of cutting inserts (1.2; 1.3; 1.4), which are disposed on the main body (1.1) at the end face in the region of the tip circle (Dk), wherein each of the cutting inserts (1.2; 1.3; 1.4) has at least one cutting tooth (1.2.1), wherein the cutting tooth (1.2.1) forms a cutting edge (6) which runs at least along one flank of the cutting tooth (1.2.1), and wherein the cutting tooth has a cutting face (5.5) associated with the cutting edge (6), and a clearance face (5.1 - 5.4) associated with the cutting edge (6), wherein the cutting inserts (1.2; 1.3; 1.4) are integrally bonded to the main body (1.1) at the end face,
**characterised in that** the cutting inserts (1.2; 1.3; 1.4) after being attached to the main body (1.1) are finally machined, wherein the cutting face (5.5) along the cutting edge (6) is provided with a cutting face chamfer (7) which in relation to the cutting face (5.5) runs so as to be inclined at a chamfer angle (*γ*1, *γ*2), wherein the chamfer angle (*γ*1, *γ*2) varies along the cutting edge (6), and wherein the cutting face chamfer (7) has a width of at least 50 micrometres.

11. A method for fine machining a workpiece having pre-machined teeth by hob peeling using a tool according to any one of Claims 1 to 9,
wherein the workpiece (2) is rotated about a workpiece axis (C1),
wherein the tool (1) in a rolling engagement with the workpiece (2) is rotated about a tool axis (B1) that in relation to the workpiece axis (C1) is aligned in a skewed manner, wherein the rolling engagement defines a rolling angle, and
wherein the tool (1) is fed axially in a direction that is parallel or antiparallel with the workpiece axis (C1),
wherein the cutting face (5.5) of each cutting tooth (1.2.1) along the cutting edge (6) is provided with a cutting face chamfer (7) which in relation to the cutting face (5.5) runs so as to be inclined at a chamfer angle (*γ*1, *γ*2), wherein the chamfer angle (*γ*1, *γ*2) varies along the cutting edge (6), and
wherein the chips which form during the passage of the cutting edge (6) of a cutting tooth (1.2.1) through a tooth gap of the workpiece (2) run off exclusively by way of the cutting face chamfer (7) such that the cutting face (5.5) acts only as a reference face.

12. The method according to Claim 11,
wherein, during the passage of the cutting edge (6) of a cutting tooth (1.2.1) through a tooth gap of the workpiece (2), a chamfer cutting angle in relation to the cutting face chamfer is formed at each point of the cutting edge (6), the chamfer cutting angle acting as a de-facto cutting angle,
wherein the chamfer cutting angle at each point on the cutting edge depends on the rolling angle during the passage of the cutting edge (6) through the tooth gap, and
wherein the chamfer angle (*γ*1, *γ*2) varies along the cutting edge (6) in such a manner that a reference value of the chamfer cutting angle as calculated in each case at a fixed point of the cutting edge (6) throughout the passage of the cutting edge (6) of a cutting tooth (1.2.1) through the tooth gap varies to a lesser extent along the cutting edge than would be the case for a corresponding reference value for the cutting angle if no cutting face chamfer was present and the chip was to run off directly by way of the cutting face (5.5).

13. The method according to Claim 11 or 12, **characterised in that** the chamfer angle (*γ*1, *γ*2) varies along the cutting edge in such a manner that the chamfer cutting angle is negative along the entire cutting edge, and the numeric maximum value of said chamfer cutting angle is in the range from -5° to -40°, preferably -20° to - 35°.

14. The method according to any one of Claims 11 to 13, wherein the cutting face chamfer (7) along the entire cutting edge (6) has a width (Bre, Bli) which is larger, preferably at least two times larger, than the maximum thickness of the chip that forms during the passage of the cutting edge (6) through a tooth gap of the workpiece (2).

15. Use of a tool according to any one of Claims 1 to 9 for the hard fine machining of workpieces (2) having pre-machined teeth by hob peeling.

## Revendications

1. Outil pour le taillage en développante de pièces à fabriquer pré-dentées (2), comprenant:
un corps de base en forme de roue dentée (1.1), qui définit un axe d'outil (B1) et qui définit un cercle de tête (Dk) sur un front, ainsi que
un ou plusieurs plaquettes de coupe (1.2; 1.3; 1.4), qui sont disposées frontalement dans la zone du cercle de tête (Dk) sur le corps de base (1.1), les plaquettes de coupe (1.2; 1.3; 1.4) présentant respectivement au moins une dent de coupe (1.2.1), la dent de coupe (1.2.1) formant un coupant (6), qui s'étend au moins le long d'un flanc de la dent de coupe (1.2.1), et dans lequel la dent de coupe présente une face de coupe (5.5) affectée au coupant (6) et une face libre (5.1-5.4) affectée au coupant (6),
**caractérisé en ce que**
la face de coupe (5.5), le long du coupant (6), est pourvue d'un biseau de face de coupe (7) qui s'étend de manière inclinée d'un angle de biseau (γ1,γ2) par rapport à la face de coupe (5.5),
l'angle de biseau (γ1,γ2) varie au cours du coupant (6), et
le biseau de face de coupe (7) présente une largeur d'au moins 50 micromètres.

2. Outil selon la revendication 1, **caractérisé en ce que** l'angle de biseau (γ1,γ2) augmente ou diminue continuellement au cours du coupant (6) le long d'au moins un des flancs depuis la tête de dent (Xk) jusqu'à la base de dent (Xf).

3. Outil selon la revendication 1 ou 2, **caractérisé en ce que** le biseau de face de coupe (7) présente une largeur (Bre, Bli) qui varie au cours du coupant (6), en particulier augmente ou diminue continuellement au cours du coupant (6) le long d'au moins un des flancs depuis la tête de dent (Xk) jusqu'à la base de dent (Xf).

4. Outil selon l'une des revendications précédentes, **caractérisé en ce que** le coupant (6) de la dent de coupe est arrondie d'un rayon (R), le rayon (R) étant de préférence d'au moins 15 micromètres et éventuellement augmentant de la base de dent à la tête de dent.

5. Outil selon l'une des revendications précédentes, **caractérisé en ce que** les faces de coupe (5.5) de toutes les dents de coupe (1.2.1) sont disposées dans un plan commun, le plan commun s'étendant orthogonalement à l'axe d'outil (B1).

6. Outil selon l'une des revendications précédentes, **caractérisé en ce que** les plaquettes de coupe (1.2; 1.3; 1.4) sont matériellement liées au corps de base (1.1) moyennant la formation d'une couche de liaison (1.7), dans lequel la couche de liaison (1.7) dans la zone de la tête de dent (Xk) des dents de coupe (1.2.1) est réalisée plus épaisse que dans la zone de la base de dent (Xf).

7. Outil selon la revendication 6, **caractérisé en ce que**
l'outil comporte un disque de positionnement (1.5), qui présente des éléments de positionnement (1.5.1) sur sa circonférence extérieure; dans lequel les plaquettes de coupe (1.2; 1.3; 1.4) sont disposées sur la circonférence extérieure du disque de positionnement (1.5), et dans lequel les plaquettes de coupe (1.2; 1.3; 1.4) sont pourvues sur le côté intérieur d'éléments de maintien (5.9) qui sont réalisés de manière complémentaire aux éléments de positionnement (1.5.1) et qui réalisent un accouplement mécanique entre le disque de positionnement (1.5) et les plaquettes de coupe (1.2; 1.3; 1.4) par rapport à une direction radiale et / ou tangentielle, et / ou
l'outil présente un disque auxiliaire en forme de roue dentée (1.6) et **en ce que** les plaquettes de coupe (1.2; 1.3; 1.4) sont disposées axialement entre le corps de base (1.1) et le disque auxiliaire (1.6) et sont matériellement liées de manière fixe, de préférence collées ou soudées, au corps de base (1.1) ainsi qu'au disque auxiliaire (1.6).

8. Outil selon l'une des revendications précédentes, **caractérisé en ce que**
chaque plaquette de coupe (1.3) a la forme d'un arc de cercle et présente une pluralité de dents de coupe (1.2.1), les dents de coupe (1.2.1) étant disposées sur la circonférence extérieure le long d'un segment d'arc de cercle sur la plaquette de coupe (1.3), et dans lequel les plaquettes de coupe (1.3) forment au total un anneau circulaire, ou
l'outil comporte une seule plaquette de coupe en forme d'anneau circulaire (1.4), les dents de coupe étant disposées sur la circonférence extérieure de la plaque de coupe (1.4).

9. Outil selon l'une des revendications précédentes, **caractérisé en ce que**
un module RFID (10) est disposé dans ou sur le corps de base (1.1), qui est pourvu d'une mémoire,
un code d'identification pour une identification sans ambiguïté de l'outil est stocké dans la mémoire, et / ou
des données sur la géométrie de l'outil, en particulier des données sur la géométrie du biseau de la face de coupe, sont stockées dans la mémoire et peuvent être lues depuis la mémoire sans contact et / ou peuvent être modifiées dans la mémoire, et / ou
le module RFID est pourvu d'au moins un capteur pour détecter la température, les vibrations ou le bruit de structure, qui peut être lu et / ou contrôlé sans contact.

10. Procédé de production d'un outil, comprenant la mise à disposition d'un corps de base en forme de roue dentée (1.1), qui définit un axe d'outil (B1) et qui définit un cercle de tête (Dk) sur un front et une ou plusieurs plaquettes de coupe (1.2; 1.3; 1.4), qui sont disposées frontalement dans la zone du cercle de tête (Dk) sur le corps de base (1.1), les plaquettes de coupe (1.2; 1.3; 1.4) présentant respectivement au moins une dent de coupe (1.2.1), la dent de coupe (1.2.1) formant un coupant (6), qui s'étend au moins le long d'un flanc de la dent de coupe (1.2.1), et dans lequel la dent de coupe présente une face de coupe (5.5) affectée au coupant (6) et une face libre (5.1-5.4) affectée au coupant (6), dans lequel les plaquettes de coupe (1.2; 1.3; 1.4) sont liées frontalement au corps de base (1.1),
**caractérisé en ce que** les plaquettes de coupe (1.2; 1.3; 1.4) sont matériellement liées au corps de base (1.1) et le finissage est effectué après leur disposition sur le corps de base (1.1), dans lequel la face de coupe (5.5), le long du coupant (6), est pourvue d'un biseau de face de coupe (7) qui s'étend de manière inclinée d'un angle de biseau (γ1,γ2) par rapport à la face de coupe (5.5), l'angle de biseau (γ1,γ2) varie au cours du coupant (6), et le biseau de face de coupe (7) présente une largeur d'au moins 50 micromètres.

11. Procédé d'usinage de précision fin d'une pièce à fabriquer pré-dentée par taillage en développante avec un outil selon l'une des revendications 1 à 9,
dans lequel la pièce à fabriquer (2) est mise en rotation autour d'un axe de pièce à fabriquer (C1),
dans lequel l'outil (1) est mis en rotation en engagement de roulement avec la pièce à fabriquer (2) autour d'un axe d'outil (B1) aligné obliquement par rapport à l'axe de la pièce à fabriquer (C1), l'engagement de roulement définissant un angle de alignement roulement, et
dans lequel l'outil (1) est avancé axialement de manière parallèle ou antiparallèle à l'axe de la pièce à fabriquer (C1),
dans lequel la face de coupe (5.5) de chaque dent de coupe (1.2.1), le long du coupant (6), est pourvue d'un biseau de face de coupe (7) qui s'étend de manière inclinée d'un angle de biseau (γ1,γ2) par rapport à la face de coupe (5.5), l'angle de biseau (γ1,γ2) varie au cours du coupant (6), et
dans lequel les copeaux qui se forment lors du passage du coupant (6) d'une dent de coupe (1.2.1) à travers un entre-dent de la pièce à fabriquer (2), passent exclusivement par le biseau de face de coupe (7), de sorte que la face de coupe (5.5) sert uniquement de face de référence.

12. Procédé selon la revendication 11,
dans lequel, pendant le passage du coupant (6) d'une dent de coupe (1.2.1) à travers un entre-dent de la pièce à fabriquer (2), en chaque point du coupant (6), un angle de coupe de biseau, basé sur le biseau de face de coupe, est formé, qui agit comme l'angle de coupe réel,
dans lequel l'angle de coupe de biseau en chaque point de coupant dépend de l'angle de roulement pendant le passage du coupant (6) à travers l'entre-dent, et
dans lequel l'angle de biseau (γ1,γ2) est conçu pour varier le long du coupant (6) de telle sorte qu'une valeur de référence de l'angle de coupe de biseau, calculé respectivement en un point fixe du coupant (6) sur le passage du coupant (6) d'une dent de coupe (1.2.1) à travers l'entre-dent, change moins le long du coupant que la valeur de référence correspondante pour l'angle de coupe changerait s'il n'y avait pas de biseau de face de coupe et le copeau passerait directement à travers de la face de coupe (5.5).

13. Procédé selon la revendication 11 ou 12, **caractérisé en ce que** l'angle de biseau (γ1,γ2) est conçu pour varier le long du coupant de telle sorte que l'angle de coupe de biseau est négatif sur toute la course du coupant et sa valeur maximale est comprise dans une plage de -5 ° à -40 °, de préférence de -20 ° à -35 °.

14. Procédé selon l'une des revendications 11 à 13, dans lequel le biseau de face de coupe (7) le long de tout le coupant (6) présente une largeur (Bre, Bli), qui est supérieure à l'épaisseur maximale des copeaux se formant lors du passage du coupant (6) à travers un entre-dent de la pièce à fabriquer (2), de préférence au moins deux fois supérieur.

15. Utilisation d'un outil selon l'une des revendications 1 à 9 pour l'usinage de précision dur de pièces à fabriquer pré-dentées (2) par taillage en développante.
